# EUROPEAN PATENT SPECIFICATION

(11) **EP 4 187 942 B1**
(45) Date of publication and mention of the grant of the patent: **24.12.2025**
(21) Application number: 21853317.2
(22) Date of filing: 01.06.2021
(51) Int. Cl.: H04W 4/24, H04L 12/14, H04M 15/00

(54) **CHARGING PROCESSING METHOD, SYSTEM, AND RELATED DEVICE**
LADEVERARBEITUNGSVERFAHREN, SYSTEM UND ZUGEHÖRIGE VORRICHTUNG
PROCÉDÉ DE TRAITEMENT DE FACTURATION, SYSTÈME, ET DISPOSITIF ASSOCIÉ

(30) Priority: 04.08.2020 CN 202010774810
(43) Date of publication of application: 31.05.2023
(60) Divisional application: 25214158.5
(73) Proprietor: Huawei Technologies Co., Ltd., Shenzhen, Guangdong 518129 (CN)
(72) Inventor: CHAI, Xiaoqian, Shenzhen, Guangdong 518129 (CN)
(74) Representative: Körber, Martin Hans
(86) International application number: PCT/CN2021/097739
(87) International publication number: WO 2022/028076

(56) References cited:
- EP-A1- 3 749 010
- WO-A1-2019/174386
- CN-A- 105 247 903
- CN-A- 105 659 690
- CN-A- 105 992 181
- CN-A- 111 211 912
- US-B2- 9 553 913
- "3rd Generation Partnership Project; Technical Specification Group Services and System Aspects; System architecture for the 5G System (5GS); Stage 2 (Release 16)", 3 August 2020 (2020-08-03), XP052297826, Retrieved from the Internet <URL:https://ftp.3gpp.org/3guInternal/3GPP_ultimate_versions_to_be_transposed/sentToDpc/23501-g51.zip> [retrieved on 20200803]
- "3rd Generation Partnership Project; Technical Specification Group Services and System Aspects; Telecommunication management; Charging management; Charging architecture and principles (Release 16)", 13 January 2020 (2020-01-13), XP052298943, Retrieved from the Internet <URL:https://ftp.3gpp.org/3guInternal/3GPP_ultimate_versions_to_be_transposed/sentToDpc/32240-g10.zip> [retrieved on 20200113]
- ZTE: "Discussion on Data volume reporting@Duplication transmission", vol. RAN WG3, no. Sanya, China; 20180416 - 20180420, 15 April 2018 (2018-04-15), XP051429857, Retrieved from the Internet <URL:http://www.3gpp.org/ftp/Meetings%5F3GPP%5FSYNC/RAN3/Docs/> [retrieved on 20180415]
- HUAWEI: "Add Highly reliable URLLC services Charging", 3GPP DRAFT; S5-205085, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG5, no. e-meeting; 20201012 - 20201021, 2 October 2020 (2020-10-02), Mobile Competence Centre ; 650, route des Lucioles ; F-06921 Sophia-Antipolis Cedex ; France , XP051938845
- ZTE: "Discussion on Secondary RAT data volume reporting", 3GPP DRAFT; R3-182789 DISCUSSION ON SECONDARY RAT DATA VOLUME REPORTING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Busan, South Korea; 20180521 - 20180525, 20 May 2018 (2018-05-20), Mobile Competence Centre ; 650, route des Lucioles ; F-06921 Sophia-Antipolis Cedex ; France , XP051445289
- HUAWEI, HISILICON: "Add description of solution 4 in 23.725 to 23.501", 3GPP DRAFT; S2-1901370 WAS S2-1901228 WAS S2-1900290 TS 23.501 ADD DESCRIPTION OF SOLUTION 4 IN 23.725 TO 23.501 V3, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRAN, vol. SA WG2, no. Kochi, India; 20190121 - 20190125, 25 January 2019 (2019-01-25), Mobile Competence Centre ; 650, route des Lucioles ; F-06921 Sophia-Antipolis Cedex ; France , XP051597181

## Description

### TECHNICAL FIELD

This application relates to the communication field, and in particular, to a method and system for performing charging processing on a data connection service in a data connection session, and a related device.

### BACKGROUND

To support URLLC (Ultra-reliable and Low Latency Communication, ultra-reliable and low latency communication) data connection services, the 3GPP (3rd Generation Partnership Project, the 3rd Generation Partnership Project) standard specification defines redundant transmission technology solutions for implementing reliable transmission in the 5GS (5th Generation System, 5th generation system). For example, data transmission is performed through a redundant PDU (protocol data unit, protocol data unit) session, over a redundant data transmission tunnel for a QoS (quality of service, quality of service) flow (QoS Flow, quality of service flow) of a PDU session, or over a redundant transport layer path for a PDU session.

An existing charging processing device, for example, a charging function (Charging Function, CHF) device defined in the 3GPP standard specification, does not participate in redundant transmission used for a data connection service, and cannot learn of a situation about redundant transmission of the data connection service, either. If charging is performed according to an existing mechanism of the charging processing device, operators' or end users' diversified charging requirements cannot be met. For example, a charging result may be inaccurate or charging for traffic of redundant transmission may be omitted, resulting in an economic loss of operators. In addition, inconsistency between charged traffic and user-perceivable traffic may result in misunderstanding of end users, affecting user experience.

How to enable a charging processing device to perform charging processing based on a situation about redundant transmission is a technical problem to be resolved urgently.
"3rd Generation Partnership Project; Technical Specification Group Services and System Aspects; System architecture for the 5G System (5GS); Stage 2 (Release 16)", (20200803), 3GPP DRAFT; 23501-G51, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, URL: https://ftp.3gpp.org/3guInternal/3GPP_ultimate_versions_to_be_transposed/sentToDpc/23501-g51.zip, (20200803), discloses technical specification group services and system aspects and system architecture for the 5G system.
"3rd Generation Partnership Project; Technical Specification Group Services and System Aspects; Telecommunication management; Charging management; Charging architecture and principles (Release 16)", (20200113), 3GPP DRAFT; 32240-G10, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, URL: https://ftp.3gpp.org/3guInternal/3GPP_ultimate_versions_to_be_transposed/sentToDpc/32240-g10.zip, (20200113), discloses technical specification group services and system aspects, telecommunication management, charging management and charging architecture and principles.

### SUMMARY

In view of this, a charging processing method is provided, to enable a charging processing device to perform charging processing based on a situation about redundant transmission of a data connection service, to resolve the problem of an inaccurate charging result in this case. The above mentioned objects are solved by the features of the independent claims.

### BRIEF DESCRIPTION OF DRAWINGS

FIG. 1 is a schematic diagram of a session redundancy transmission mode according to an embodiment of this application;
FIG. 2A is a first schematic diagram of a tunnel redundancy transmission mode according to an embodiment of this application;
FIG. 2B is a second schematic diagram of a tunnel redundancy transmission mode according to an embodiment of this application;
FIG. 3 is a schematic diagram of a transport layer redundancy transmission mode according to an embodiment of this application;
FIG. 4A is an architectural diagram of a first communication system according to an embodiment of this application;
FIG. 4B is a flowchart of a first method for performing charging processing on a redundantly transmitted data connection service according to an embodiment of this application;
FIG. 5 is an architectural diagram of a second communication system according to an embodiment of this application;
FIG. 6A is a flowchart of a second method for performing charging processing on a redundantly transmitted data connection service according to an embodiment of this application;
FIG. 6B is a flowchart of a third method for performing charging processing on a redundantly transmitted data connection service according to an embodiment of this application;
FIG. 7A is an architectural diagram of a third communication system according to an embodiment of this application;
FIG. 7B is a flowchart of a fourth method for performing charging processing on a redundantly transmitted data connection service according to an embodiment of this application;
FIG. 8 is a structural diagram of hardware of a charging trigger device and a charging processing device according to an embodiment of this application;
FIG. 9 is a schematic diagram of a logical structure of a charging processing device according to an embodiment of this application; and
FIG. 10 is a schematic diagram of a logical structure of a charging trigger device according to an embodiment of this application.

### DESCRIPTION OF EMBODIMENTS

The following describes technical solutions in embodiments of this application with reference to the accompanying drawings in embodiments of this application. In the descriptions of this application, "/" represents an "or" relationship between associated objects unless otherwise specified. For example, A/B may represent A or B. The term "and/or" in this application indicates an association relationship for describing associated objects and indicates that three relationships may exist. For example, A and/or B may indicate the following three cases: Only A exists, both A and B exist, and only B exists, where A and B may be singular or plural. In addition, in the descriptions of this application, unless otherwise stated, "a plurality of" means two or more than two. In addition, to clearly describe the technical solutions in embodiments of this application, words such as "first" and "second" are used in embodiments of this application to distinguish between same items or similar items that have basically the same functions or purposes. A person skilled in the art may understand that the terms such as "first" and "second" do not limit a quantity or an execution sequence, and the terms such as "first" and "second" do not indicate a definite difference.

For a data connection session or a data connection service in the data connection session, a communication network of an operator may improve the reliability of the data connection session or the data connection service in the data connection session through redundant transmission in at least the following three modes.

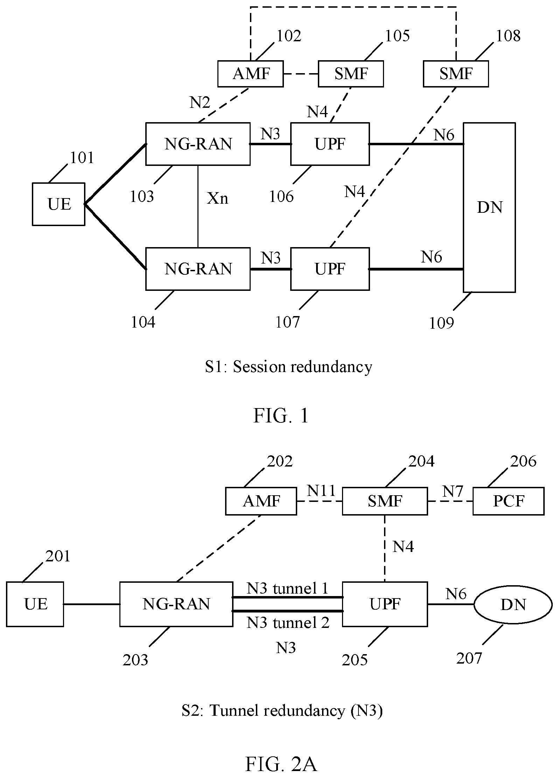

Session redundancy (denoted as "S1"): Also named as redundancy of a data connection session, means that two mutually redundant data connection sessions exist between user equipment and a data network, and a same service data flow of a service of a user is transmitted in the two mutually redundant data connection sessions. For example, as shown in FIG. 1, UE (user equipment, user equipment) 101 establishes two PDU (protocol data unit, protocol data unit) sessions, and establishes two mutually independent user plane (user plane) paths based on the two PDU sessions, to transmit same data between the UE 101 and a DN (Data Network, data network) 109. For ease of description, this redundant transmission mode is referred to as "session redundancy" for short in embodiments of this application.

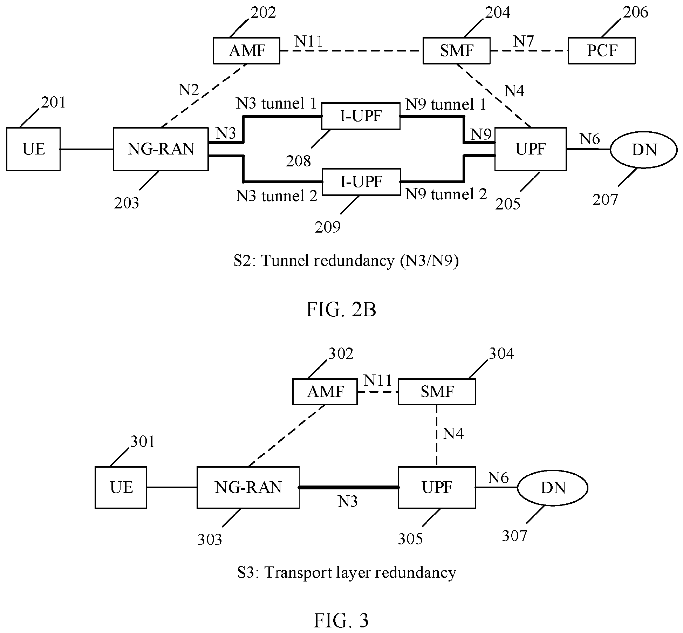

Tunnel redundancy (denoted as "S2"): Tunnel redundancy means that two user plane transmission tunnels transmitting same data exist between a radio access network device and a user plane data gateway, correspond to a same QoS flow in the data connection session (that is, service data flows in the QoS flow are transmitted redundantly through the two user plane transmission tunnels), and form two mutually redundant transmission tunnel (N3N9)-level transmission paths. For example, as shown in FIG. 2A or FIG. 2B, in a QoS flow establishment process, an SMF (Session Management Function, session management function) device 204 notifies a PSA (PDU session anchor, PDU session anchor) UPF (User Plane Function, user plane function) device 205 and an NG-RAN (Next-Generation Radio Access Network, next generation radio access network) device 203 to perform redundant transmission at a granularity of a QoS flow. Specifically, same data can be transmitted through two N3 interface tunnels (N3 Tunnel) between the PSA UPF device 205 and the NG-RAN device 203, and the two N3 interface tunnels share a same QoS flow identifier, as shown in FIG. 2A. Alternatively, same data may be transmitted through two, N3 and N9, interface tunnels (N3 and N9 Tunnel) between the PSA UPF device 205 and the NG-RAN device 203, and the two, N3 and N9, tunnels also share a same QoS flow identifier, as shown in FIG. 2B. For ease of description, in embodiments of this application, this redundant transmission mode is referred to as "tunnel redundancy" for short, and corresponds to a QoS flow identifier.

Transport layer redundancy (denoted as "S3"): Transport layer redundancy means that two transport layer paths jointly corresponding to the data connection session exist between a radio access network device and a user plane data gateway, transmit same data (that is, all service data flows in the data connection session are respectively transmitted redundantly through the two transport layer paths), and form two mutually redundant data connection session-level transmission paths. For example, as shown in FIG. 3, when an N3 GTP-U (GPRS Tunneling Protocol-User Plane, GPRS Tunneling Protocol-User Plane) tunnel is established, two mutually independent transport layer paths (path at transport layer) are established between a UPF device 305 and an NG-RAN device 303. In a process in which the UPF device 305 sends downlink data to the N3 GTP-U tunnel, the downlink data is replicated to the two transport layer paths. After receiving the downlink data, the NG-RAN device 303 excludes repeated downlink data and forwards the downlink data to UE 301. In a process in which the NG-RAN device 303 sends uplink data to the N3 GTP-U tunnel, the uplink data is also replicated to the two transport layer paths. After receiving the uplink data, the UPF device 305 excludes repeated uplink data and then forwards the uplink data to a DN 307. For ease of description, this redundant transmission mode is referred to as "transport layer redundancy" for short in this application.

During redundant transmission in S1 mode, for either data connection session in two redundant data connection sessions, in any collection periodicity, traffic between the UE and the user plane data gateway is consistent with data traffic between the user plane data gateway and the data network (a case in which a packet loss is caused by policy control or a network reason is not considered). Moreover, redundant transmission in S2 or S3 mode occurs only between the radio access network device and the user plane data gateway, and traffic of a data connection service of the same redundant transmission is inconsistent on two sides of the user plane data gateway. That is, regardless of a network exception such as a packet loss, in any collection periodicity, traffic on the radio access network device side is two times the traffic on the data network side.

The preceding reliability improvement is achieved by the operator through additional investment of network resources, for example, the second PDU session supported by an NG-RAN 104 and a UPF 107 in FIG. 1, an N3 tunnel 2 between the NG-RAN 203 and the UPF 205 in FIG. 2A, an N3 tunnel 2 and an N9 tunnel 2 between the NG-RAN 203 and the UPF 205 in FIG. 2B, and the second transport layer path between the NG-RAN 303 and the UPF 305 in FIG. 3. Therefore, the charging processing device should provide a new charging capability, for example, perform charging processing on additional traffic caused by redundant transmission, so that the operator can charge for network resources additionally invested by the operator. In addition, because a usage amount that can be perceived by the user equipment is different from a usage amount that can be collected by the user plane data gateway, the charging processing device is further to distinguish between original usage amount without redundant transmission and additional usage amount added due to redundant transmission, and then perform charging processing. Otherwise, unnecessary misunderstanding by an end user may be caused, resulting in poor user experience.

Therefore, the charging processing device is to be capable of obtaining timely a situation about redundant transmission of a data connection session in a data transmission process, managing timely a usage amount obtaining mode, and performing timely corresponding charging processing on an obtained usage amount, so as to meet operators' or end users' diversified charging requirements.

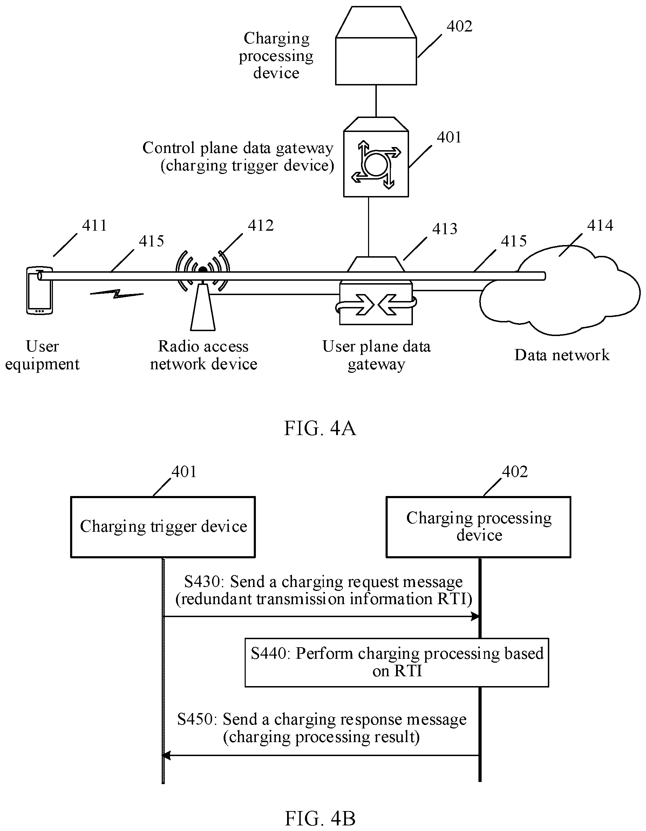

FIG. 4A is an architectural diagram of a first communication system according to an embodiment of this application. The first communication system includes user equipment 411, a radio access network device 412, a user plane data gateway 413, a data network 414, a charging processing device 402, and a charging trigger device 401. The charging trigger device 401 and the charging processing device 402 form a charging processing system, to perform charging processing on a data connection session 415. In a possible solution, the charging processing system further includes a policy control device (not shown in FIG. 4A), a bill management device (not shown in FIG. 4A), and the like. The following briefly describes some of the devices.

The user equipment 411 is a device of an end user, and is connected to the radio access network device 412 via an air interface (Note: "connect" or "connection" described in embodiments of this application includes a direct connection or an indirect connection, where the latter refers to a connection through one or more intermediate network devices, which is not described again). The user equipment 411 is responsible for initiating creation or release of the data connection session 415. The user equipment 411 communicates with a device or a server in the data network 414 by using the data connection session 415, so as to provide diversified services, such as a voice call and video playback, for the end user.

The user equipment 411 may be UE (user equipment, user equipment) defined in the 3GPP standard specification. For example, the user equipment includes a smartphone, a laptop computer (Laptop) with a wireless communication function, a tablet computer, a wearable device, an AR (Augmented Reality, augmented reality) device, an IoT (Internet of Things, Internet of Things) device, and the like.

It can be understood that, in actual application, the communication system shown in FIG. 4A may include more user equipment.

The radio access network device 412 is a network element in a radio access network, and is responsible for sending a radio frequency signal to the user equipment 411 or receiving a radio frequency signal from the user equipment 411, so as to send a data packet of the user plane data gateway 413 to the user equipment 411 or send a data packet sent by the user equipment 411 to the user plane data gateway 413. The radio access network device 412 is usually an NG-RAN defined in the 3GPP standard specification, and includes, but is not limited to, an eNB (evolved NodeB, evolved NodeB) and a gNB (gNodeB, 5G base station). It can be understood that, in actual application, there may be more radio access network devices in the communication system shown in FIG. 4A.

The user plane data gateway 413 is a network element in a core network, and transfers a data packet that is from the user equipment 411 and that passes through the radio access network device 412 to the data network 414, or transfers a data packet sent by the data network 414 to the radio access network device 412 and then to the user equipment 411. The user plane data gateway 413 is usually a UPF device, a PGW-U (packet data network gateway for user plane, packet data network gateway for user plane), or an SGW-U (serving gateway for user plane, serving gateway for user plane) defined in the 3GPP standard specification. It can be understood that, in actual application, there may be more user plane data gateways in the communication system shown in FIG. 4A.

The data network 414 is a network configured to transmit data and formed by using a data switch as a transfer point, for example, the Internet. The data network 414 includes an application server (not shown in FIG. 4A), and provides services or capabilities for various APPs (Application, application) on the user equipment 411.

The data connection session 415 is an association (English: association between the UE and a data network that provides a connectivity service) between the user equipment 411 and the data network 414, and is used to provide a connectivity service for communication between the user equipment 411 and the data network 414, so as to transmit data packets (packet) between the user equipment, the radio access network device, the user plane data gateway, and the data network. A creation process of the data connection session 415 may be initiated by the user equipment 411, and a release process of the data connection session 415 may be initiated by the user equipment 411 or another network device.

The data connection session 415 may be a PDU session in a 5G network architecture, or may be an IP-CAN (IP-connectivity access network, IP connectivity access network) session in a 4G (4th generation, fourth generation) network architecture, or may be a session in another form between the user equipment and the data network. This is not limited in embodiments of this application.

In embodiments of this application, the data connection session is sometimes referred to as a "session" for short.

The charging trigger device 401 is a device that collects charging information for data transmitted in the data connection session 415 and reports the charging information to the charging processing device. The charging trigger device 401 is connected to both the user plane data gateway 413 and the charging processing device 402. The charging trigger device 401 have the following main functions:
(1) obtaining related information of redundant transmission used for the data connection session 415 or a data connection service in the data connection session 415, and forming redundant transmission information accordingly;
(2) sending the redundant transmission information and charging data to the charging processing device 402; and
(3) receiving a charging processing result from the charging processing device 402, and further performing a further charging related operation or stopping a charging related operation based on the charging processing result.

In addition, in S2 or S3 mode, for a characteristic of asymmetric traffic on two sides of the user plane data gateway 413, the charging trigger device 401 may further report, to the charging processing device 402, traffic and description information (for example, traffic on which side is described) that are of the data connection service in the data connection session 415 and that are transmitted on different sides of the user plane data gateway 413.

The charging trigger device 401 includes a CTF (Charging Trigger Function, charging trigger function) defined in the 3GPP standard specification. The charging trigger device 401 may be deployed in an SMF device (that is, a control plane gateway) defined in the 3GPP standard specification, or may be deployed in another device having a same or similar function as the SMF device, for example, a PGW-C (packet data network gateway for control plane, packet data gateway for control plane) or an SGW-C (serving gateway for control plane, serving gateway for control plane), or may be deployed in another device that can obtain information such as a usage amount and a redundant transmission mode in a data connection session. A physical deployment mode of the charging trigger device 401 is not limited in this embodiment of this application.

It can be understood that, in actual application, the communication system shown in FIG. 4A may include more charging trigger devices. For example, in the schematic diagram of the redundant transmission mode shown in FIG. 1, there may be two charging trigger devices that are respectively deployed in an SMF 105 and an SMF 108.

For ease of description, in embodiments of this application, the charging trigger device is sometimes referred to as a "CTF device" or a "CTF" for short. In a scenario in which the CTF device is deployed in an SMF device, an "SMF device" or an "SMF" is directly used to represent the "CTF device". Details are not described in subsequent embodiments.

The charging processing device 402 is a device that performs charging processing on a data connection service in the data connection session 415 based on information sent by a charging trigger device (including the charging trigger device 401 and another charging trigger device not shown in FIG. 4A). The charging processing device 402 have the following main functions:
(1) receiving redundant transmission information from the charging trigger device, to learn of related information of redundant transmission used for the data connection session 415 or the data connection service in the data connection session 415;
(2) performing a charging processing operation based on the redundant transmission information, where the operation includes any one of the following:
   (2.1) Determine, based on the redundant transmission information, a redundant service charging processing mode of the data connection session 415 or the data connection service in the data connection session 415, receive charging data from the charging trigger device, perform operations, such as quota granting, account deduction, and charging data record writing, for the data connection service in the data connection session, and send results of these operations to the charging trigger device, to enable the charging trigger device to further perform charging-related operations, such as quota application and usage amount reporting, based on the results. Optionally, the redundant service charging processing mode may also be determined with reference to other information, for example, user subscription information (the user subscription information may specify whether to perform charging for additional traffic or a charge rate for additional traffic and the like).
   (2.2) Determine, based on the redundant transmission information, a redundant service charging processing mode for the data connection session 415 or the data connection service in the data connection session 415, further determine a usage amount management mode that meets a requirement of the redundant service charging processing mode, and send indication information to the charging trigger device, to enable the charging trigger device to perform quota management and usage amount collection and reporting according to the specified usage amount management mode. Optionally, the usage amount management mode may also be determined with reference to other information such as user subscription information and a locally stored policy of the charging processing device.
   (2.3) Determine, based on the redundant transmission information, that the data connection session does not need to be charged, and further send no-charging indication information to the charging trigger device, to enable the charging trigger device to stop/suspend a charging operation on the data connection session. Optionally, it may also be determined, based on other information such as user subscription information and a locally stored policy of the charging processing device, that the data connection session does not need to be charged.

In addition, in S2 or S3 mode, if the charging trigger device 401 reports the traffic and the description information that are of the data connection service in the data connection session 415 and that are transmitted on different sides of the user plane data gateway 413, the charging processing device may further determine, based on this, that the corresponding data connection service is transmitted redundantly, and further perform charging processing according to the charging policy.

The charging processing device 402 may be implemented based on a CHF (Charging Function, charging function) device defined in the current 3GPP standard specification, or may be implemented based on a CCS (Converged Charging System, converged charging system) device (including a function of the CHF device) defined in the current 3GPP standard specification, or may be implemented based on another device having a function equivalent to or similar to that of the CHF device or the CCS device. In addition, the charging processing device 402 may be independently deployed in a physical device, or may be co-deployed with another function device in a same physical device. A physical deployment mode of the charging processing device 402 is not limited in this embodiment of this application.

It can be understood that, in actual application, the communication system shown in FIG. 4A may include more charging processing devices.

For ease of description, in embodiments of this application, the charging processing device is sometimes referred to as a "CHF device" or a "CHF" for short.

For ease of understanding embodiments of this application, some concepts are explained below.

Traffic: Traffic refers to a quantity of bits transmitted by a user plane data gateway (such as a UPF device) within a specific time range (such as a collection periodicity).

Usage amount: Usage amount refers to traffic reported to a charging processing device (for example, a CHF device) for charging processing. In embodiments of this application, usage amount information includes a usage amount and usage amount description information.

QoS flow: QoS flow is the finest granularity of QoS-differentiated forwarding processing in a PDU session. Generally, a QoS flow is identified by a QFI (QoS flow identifier, QoS flow identifier).

Traffic of redundant transmission: Traffic of redundant transmission is the traffic transmitted on either of two mutually redundant transmission paths.

Data connection service: Data connection service is a set of service data flow(s) in a data connection session, and may be at any one of the following granularities:
(1) a granularity of a data connection session (that is, a service data flow/service data flows in a data connection service at such granularity is/are a service data flow/all service data flows in the data connection session);
(2) a granularity of a QoS flow (that is, a service data flow/service data flows in a data connection service at such granularity is a service data flow/all service data flows in a specific QoS flow in the data connection session);
(3) a granularity of a rating group (that is, a service data flow/service data flows in a data connection service at such granularity is/are a service data flow/all service data flows in a specific rating group in the data connection session); or
(4) a granularity of a service in a rating group (that is, a service data flow/service data flows in the data connection service at such granularity is/are a service data flow/all service data flows corresponding to a specific service identifier in a specific rating group in the data connection session).

For ease of description, in embodiments of this application, the data connection service is sometimes referred to as a "service" or a "data service" for short. It can be understood that, in embodiments of this application, all service data flows forming the data connection service are service data flows that require charging processing, and do not include a service data flow that is free of charge or does not require charging processing.

Redundantly transmitted data connection service: Also referred to as a redundant data connection service, is a data connection service for which a communication network implements or uses redundant transmission. The redundantly transmitted data connection service can be a data connection service for which redundant transmission in S2 or S3 mode is implemented, or can be a data connection service for which redundant transmission in S1 mode is implemented (that is, data transmitted in the data connection service is further redundantly transmitted in another data connection session).

Redundant transmission mode (Redundant Transmission Mode, RTM): Redundant transmission mode is short for a network implementation mode of redundant transmission, and includes at least session redundancy (S1), tunnel redundancy (S2), or transport layer redundancy (S3) described above. The "redundant transmission mode of a data connection session" or "redundant transmission mode of a data connection service" is a network implementation mode of redundant transmission implemented or used in a communication network for the data connection session or the data connection service. It can be understood that the redundant transmission mode may also be referred to as a "redundant transmission type".

Redundant transmission information (Redundant transmission information, RTI): Redundant transmission information is related information of redundant transmission. Redundant transmission information of a specific data connection session or a data connection service in the data connection session may only indicatewhether a communication network implements or uses redundant transmission for the data connection session or the data connection service in the data connection session, or whether transmission used for the data connection session or the data connection service in the data connection session is redundant transmission; additionally, the redundant transmission information may further indicate a redundant transmission mode of the data connection session or a redundant transmission mode of the data connection service in the data connection session. Alternatively, the redundant transmission information may only indicate a redundant transmission mode of the data connection session or a redundant transmission mode of the data connection service in the data connection session. Optionally, when the redundant transmission information indicates that the redundant transmission mode is session redundancy, the redundant transmission information may further indicate a "position" (or a role of the data connection session in redundant transmission, for example, a master data connection session or a secondary data connection session) of the data connection session in two mutually redundant data connection sessions, or may further indicate related information of another data connection session mutually redundant with the data connection session, for example, an identifier of the another data connection session, and an address or an identifier of a user plane data gateway of the another data connection session.

Optionally, the redundant transmission information also refers to usage amount information from which existence of redundant transmission can be deduced. For example, if the usage amount information includes a usage amount and a place where the usage amount is collected (that is, a side of the user plane data gateway, on which the usage amount is collected), the usage amount information may also be considered as redundant transmission information. For another example, if a usage amount collected on a radio access network side of a user plane data gateway is two times a usage amount collected on a data network side of the user plane data gateway, the charging processing device may determine that redundant transmission in S2 or S3 mode is used for the data connection service corresponding to the usage amount.

Redundant usage amount: Redundant usage amount is data traffic additionally transmitted for a data connection service due to redundant transmission in a specific collection periodicity.

Basic usage amount: Basic usage amount is data traffic of a data connection service in a specific collection periodicity assuming that there is no redundant transmission used for the data connection service.

In actual processing, where the redundant usage amount is collected and where the basic usage amount is collected are relative. In S1 mode, in two data connection sessions A and B that are mutually redundant, if partial or full traffic (in the collection periodicity) in the data connection session A is considered as a basic usage amount, corresponding partial or full traffic (in the collection periodicity) in the data connection session B is considered as a redundant usage amount, and vice versa. Similarly, in S2 mode, in two tunnels A and B that are mutually redundant, if partial or full traffic in the tunnel A is considered as a basic usage amount, corresponding partial or full traffic in the tunnel B is considered as a redundant usage amount, and vice versa. Similarly, in S3 mode, on two transport layer paths A and B that are mutually redundant, if partial or full traffic on the transport layer path A is considered as a basic usage amount, corresponding partial or full traffic on the transport layer path B is considered as a redundant usage amount, and vice versa.

Combined usage amount: Combined usage amount is a sum of a basic usage amount and a redundant usage amount. For example, if the basic usage amount is 2 MB and the redundant usage amount is also 2 MB, the combined usage amount is 4 MB (2 MB + 2 MB).

Redundant service charging processing mode: Redundant service charging processing mode is a mode in which the charging processing device performs charging processing on the redundantly transmitted data connection service, and is classified into "redundancy-included charging processing" and "redundancy-excluded charging processing".

Redundancy-included charging processing: Redundancy-included charging processing means that a charging processing device performs charging processing, for example, account deduction or charging data record writing, on both a basic usage amount and a redundant usage amount of a redundantly transmitted data connection service. A same charge rate or different charge rates may be used for the basic usage amount and the redundant usage amount, depending on a charging policy of an operator.

Redundancy-excluded charging processing: Redundancy-excluded charging processing means that a charging processing device performs charging processing on only a basic usage amount of a redundantly transmitted data connection service, for example, performs account deduction or charging data record writing on the basic usage amount by using a specific rate, without performing processing on a redundant usage amount.

Redundant usage amount processing mode: Redundant usage amount processing means that a charging trigger device manages a quota and/or a usage amount of a redundantly transmitted data connection service. Redundant usage amount processing mode is a specific mode of redundant usage amount processing, and is classified into "redundancy-included usage amount processing" and "redundancy-excluded usage amount processing".

Redundancy-included usage amount processing: redundancy-included usage amount processing is a processing operation performed by a charging trigger device on data traffic of a redundantly transmitted data connection service to include a redundant usage amount in a reported usage amount (for S2/S3), or to enable a reported usage amount to meet a requirement for a charging processing device to perform redundancy-included charging processing (for S1). The processing operation varies with a charging mode (online charging or offline charging) and a redundant transmission mode. For details, refer to embodiments of this application.

Redundancy-excluded usage amount processing: redundancy-excluded usage amount processing is a processing operation performed by a charging trigger device on data traffic of a redundantly transmitted data connection service to exclude a redundant usage amount from a reported usage amount (for S2/S3), or to enable a reported usage amount to meet a requirement for a charging processing device to perform redundancy-excluded charging processing (for S1). The processing operation varies with a charging mode and a redundant transmission mode. For details, refer to embodiments of this application.

In the communication system architecture shown in FIG. 4A, the charging processing device 402 may obtain, via the charging trigger device 401 deployed in the SMF device or the PGW-C, related information of redundant transmission used for the data connection session 415 or the data connection service in the data connection session, and perform charging processing accordingly. For details, further refer to the method procedure corresponding to FIG. 4B. In the method procedure, unless otherwise specified, "charging trigger device" refers to the charging trigger device 401, and "charging processing device" refers to the charging processing device 402. "user equipment" refers to the user equipment 411, "radio access network device" refers to the radio access network device 412, "user plane data gateway" refers to the user plane data gateway 413, "data network" refers to the data network 414, and "data connection session" refers to the data connection session 415. Details are not described again.

FIG. 4B is a flowchart of a first method for performing charging processing on a redundantly transmitted data connection service according to an embodiment of this application. In the method procedure, a charging processing device determines, based on redundant transmission information reported by a charging trigger device, that there is redundant transmission used for a data connection service in a data connection session, and performs charging processing accordingly. There are the following possible optional communications between the charging trigger device and the charging processing device:
(1) The charging processing device determines, based on the redundant transmission information, that charging processing is to be performed on the data connection session, and the charging processing device communicates with the charging trigger device for charging processing. Specifically, there are the following possible options:
   (1.1) The charging trigger device reports a combined usage amount to the charging processing device by default, and the charging processing device performs charging processing based on the reported combined usage amount in a redundant service charging processing mode determined by the charging processing device.
   (1.2) The charging processing device delivers usage amount processing indication information to the charging trigger device based on a requirement of the redundant service charging processing mode, and the charging trigger device manages a quota based on the indication information and obtains and reports a basic usage amount or a basic usage amount and a redundant usage amount based on the indication information.
(2) The charging processing device determines, based on the redundant transmission information, that redundancy-excluded charging processing is to be performed, further determines that charging processing does not need to be performed on a redundant data connection session, and ends or suspends communication with the charging trigger device for charging processing.

Specific steps of the method procedure corresponding to FIG. 4B are as follows:
Step 430: A charging trigger device sends a first charging request message to a charging processing device, where the request message includes redundant transmission information.

Specifically, the charging trigger device obtains the redundant transmission information, namely, information about redundant transmission implemented or used in a communication network for a first data connection service in a data connection session, and sends the first charging request message to the charging processing device, where the request message includes the redundant transmission information. Certainly, in addition to the redundant transmission information, a person skilled in the art knows that the charging request message may further include other information related to the data connection session, for example, an identifier of the data connection session and information about the first data connection service.

The first data connection service in this application may be at a granularity of a data connection session, or may be at a granularity of a QoS flow in a data connection session. Details are not described again.

In a possible solution, the redundant transmission information explicitly indicates that redundant transmission is used for the first data connection service, or explicitly indicates that transmission used for the data connection service is redundant transmission. For example, the redundant transmission information may be indication information such as "RedundantIndicator=true". Specifically, "transmission used for the data connection service is redundant transmission" means that a redundant data connection session is used for the data connection service for S1 mode, means that a redundant transmission tunnel is used for the data connection service for S2 mode, and means that a redundant transport layer path is used for S3 mode.

In another possible solution, the redundant transmission information may optionally be information that implicitly indicates that redundant transmission is used for the first data connection service. For example, the charging trigger device reports both a combined usage amount (for example, traffic transmitted between the user plane data gateway and the radio access network device in S2 or S3 mode) and a basic usage amount (for example, traffic transmitted between the user plane data gateway and the data network in S2 or S3 mode) to the charging processing device by default. The charging processing device determines, based on the combined usage amount and the basic usage amount that are reported, that the first data connection service is a redundantly transmitted data connection service. Therefore, the combined usage amount and the basic usage amount jointly form the redundant transmission information.

In another possible solution, the redundant transmission information may further indicate a redundant transmission mode of the first data connection service, for example, session redundancy, tunnel redundancy, or transport layer redundancy.

In another possible solution, the redundant transmission information may further indicate a "position" of the data connection session or a role of the data connection session in redundant transmission, for example, may indicate that the data connection session is a master data connection session or a secondary data connection session, or may indicate related information of another data connection session that is mutually redundant with the data connection session, for example, an identifier of the another data connection session, or an address or an identifier of a corresponding user plane data gateway.

It should be noted that the foregoing several types of redundant transmission information may be used independently or in combination.

Optionally, the first charging request message may further include a transmission delay of the first data connection service.

In this embodiment of this application, the charging request message may be specifically a charging resource creation request message or a charging resource update request message. Details are not described again.

A mode in which the charging trigger device obtains the redundant transmission information is not limited. For example, the charging trigger device may determine the redundant transmission mode of the data connection session by using a DNN (Data Network Name, data network name) or S-NSSAI (Single Network Slice Selection Assistance Information, single network slice selection assistance information) included in a data connection session creation request message and a locally configured policy.

Step 440: The charging processing device performs charging processing based on the redundant transmission information.

Specifically, the charging processing device receives and parses the first charging request message, obtains the redundant transmission information and other information related to the data connection session from the first charging request message, and further performs charging processing. A specific processing process is as follows:
(1) If the redundant transmission information indicates that transmission used for the first data connection service is redundant transmission, and/or the redundant transmission mode indicates a redundant transmission mode of the first data connection service, the charging processing device accordingly determines that there is redundant transmission used for the first data connection service, and further determines, with reference to user subscription information and the like, a redundant service charging processing mode to be applied on the data connection service: redundancy-included charging processing or redundancy-excluded charging processing. To implement the two redundant service charging processing modes, the charging processing device further performs the following operations.

(1.1) The charging processing device receives a combined usage amount from the charging trigger device, and performs redundancy-included charging processing or redundancy-excluded charging processing on the combined usage amount.

Specifically, the charging processing device may obtain the combined usage amount from the first charging request message, or may receive another charging request message from the charging trigger device, and obtain the combined usage amount from the charging request message.

Specifically, if the redundant service charging processing mode is redundancy-included charging processing, the charging processing device performs charging processing on the combined usage amount (that is, does not distinguish the basic usage amount and the redundant usage amount), or after distinguishing the basic usage amount and the redundant usage amount from the combined usage amount, performs charging processing separately, including, but not limited to, using different charge rates for the basic usage amount and the redundant usage amount. For example, the charging processing device may use a half of the combined usage amount as the basic usage amount and perform charging by using a charge rate 1 and use the other half as the redundant usage amount and perform charging by using a charge rate 2.

Specifically, if the redundant service charging processing mode is redundancy-excluded charging processing, the charging processing device obtains the basic usage amount from the combined usage amount, and performs charging processing on the basic usage amount. For example, if the combined usage amount reported by the charging trigger device is 4 MB, a half of the combined usage amount, that is, 2 MB, is used as the basic usage amount, and then charging processing is performed on the 2 MB basic usage amount.

If the first data connection service is an online charged service (that is, a data connection service on which online charging should be performed), the charging processing device further grants a quota (which may be passively granted based on a quota application sent by the charging trigger device, or may be actively granted when no quota application sent by the charging trigger device is received) to the first data connection service. The quota may be two times a quota actually reserved by the charging processing device in a corresponding account (in this way, a quantity of times that the charging trigger device requests a quota from the charging processing device may be reduced), or may be equal to an actually reserved quota. Optionally, the charging processing device may further generate first processing indication information corresponding to the quota, where the indication information indicates the charging trigger device to set a redundant flag for a usage amount corresponding to the quota, and the redundant flag indicates that the usage amount corresponding to the quota is a usage amount of a redundantly transmitted data connection service. The charging processing device may send the first processing indication information together with the quota to the charging trigger device, or may not send the first processing indication information, and instead, locally store a correspondence between the redundant flag and the quota.

(1.2) The charging processing device delivers usage amount processing indication information to the charging trigger device, to enable the charging trigger device to perform redundancy-included usage amount processing or redundancy-excluded usage amount processing, so as to respectively meet requirements of redundancy-included charging processing and redundancy-excluded charging processing.

Specifically, the charging processing device generates second processing indication information based on the determined redundant service charging processing mode. If the redundant service charging processing mode is redundancy-included charging processing, the second processing indication information indicates the charging trigger device to perform a redundancy-included usage amount processing operation for a second data connection service in the data connection session. If the redundant service charging processing mode is redundancy-excluded charging processing, the second processing indication information indicates the charging trigger device to perform a redundancy-excluded usage amount processing operation for the second data connection service.

If the redundant transmission information indicates that the redundant transmission mode of the first data connection service is session redundancy or transport layer redundancy, the second data connection service corresponds to a rating group of the first data connection service, corresponds to a QoS flow in the first data connection service, or corresponds to the data connection session corresponding to the first data connection service.

If the redundant transmission information indicates that the redundant transmission mode of the first data connection service is tunnel redundancy, the second data connection service corresponds to a rating group of the first data connection service or corresponds to a QoS flow corresponding to the first data connection service.

(1.3) If the redundant transmission information is a usage amount and collection place information, the charging processing device calculates a ratio between usage amounts on two sides of the user plane data gateway. If the usage amount between the user plane data gateway and the radio access network device is two times the usage amount between the user plane data gateway and the data network, the charging processing device determines that there is redundant transmission in S2 or S3 mode used for the first data connection service, further determines a redundant service charging processing mode, and then, performs redundancy-included charging processing or redundancy-excluded charging processing based on the usage amounts on the two sides of the user plane data gateway. The charging processing device may take the usage amount between the user plane data gateway and the radio access network device as a combined usage amount, and take the usage amount between the user plane data gateway and the data network as a basic usage amount. For how to perform redundancy-included charging processing or redundancy-excluded charging processing, refer to related descriptions in paragraph (1.1) of this step.

After redundancy-included charging processing or redundancy-excluded charging processing succeeds, the charging processing device generates indication information indicating an account deduction success (for online charging) or indication information indicating a charging data record writing success (for offline charging).

(2) If the redundant transmission information indicates that the redundant transmission mode is session redundancy, and further indicates a "position" of the data connection session or a role of the data connection session in redundant transmission, or further includes related information of another data connection session that is mutually redundant with the data connection session, to implement redundancy-excluded charging processing, the charging processing device may select one of the two mutually redundant data connection sessions for charging processing. Details are as follows:
(2.1) Assuming that the redundant transmission information indicates that the data connection session is a secondary data connection session, the charging processing device may generate no-charging indication information, where the indication information is used to indicate, to the charging trigger device, that the charging processing device does not perform charging processing on the data connection session because the data connection session is a secondary data connection session.
(2.2) Assuming that the redundant transmission information indicates related information of another data connection session that is mutually redundant with the data connection session, the charging processing device chooses to perform charging on the another data connection session, and generates no-charging indication information for the data connection session, where the indication information is used to indicate, to the charging trigger device, that charging is performed on the data connection session that is mutually redundant with the data connection session, but charging processing is not performed on the data connection session.

It can be understood that, between the data connection session and the another data connection session, the charging processing device does not necessarily select the data connection session as the one not to be charged. For the selection between the two data connection sessions, a specific selection mode is not limited in this embodiment of this application. The charging processing device may randomly select a data connection session, or may select a data connection session with a low transmission delay. If the two data connection sessions are in different network slices, the charging processing device may further select a data connection session in a network slice with a higher priority. The charging processing device may obtain a transmission delay of the data connection session from the charging request sent by the charging trigger device, and obtain, from a network slice management device, the priority of the network slice which the data connection session is in.

The no-charging indication information in the foregoing two points may be represented in a plurality of ways, and for example, may include "charging resource creation fails " and "indication information indicating that a failure cause is that the data connection session is not charged". For details, refer to subsequent embodiments of this application.

If the first charging request message includes the transmission delay of the first data connection service, the charging processing device performs charging processing based on the redundant transmission information and the transmission delay. For example, the charging processing device selects, based on the transmission delay, a data connection session that needs to be charged or a data connection session that does not need to be charged. For another example, the charging processing device determines a charge rate of a usage amount based on the transmission delay in the foregoing process of redundancy-excluded charging processing or redundancy-included charging processing. For another example, the charging processing device selects a to-be-charged usage amount based on the transmission delay (for example, in S2 mode, the charging trigger device may separately report a usage amount in each transmission tunnel and a corresponding transmission delay, and the charging processing device selects a usage amount corresponding to a smaller transmission delay).

If the data connection service is an offline charged service, the method further includes: The charging processing device writes information about the first data connection service into a charging data record, where the information about the first data connection service includes any one of the following: the redundant transmission information, the usage amount description information, or the transmission delay (if the first charging request message includes the transmission delay).

Step 450: The charging processing device sends a first charging response message to the charging trigger device, where the first charging response message includes the charging processing result.

Specifically, the charging processing device constructs the first charging response message and sends the first charging response message to the charging trigger device, where the response message includes the charging processing result, which is one of the following items:
- the quota granted by the charging processing device in step 440, or the granted quota and the corresponding first processing indication information;
- the second processing indication information generated by the charging processing device in step 440;
- the indication information generated by the charging processing device in step 440 and indicating an account deduction success or a charging data record writing success; or
- the no-charging indication information generated by the charging processing device in step 440.

In this embodiment of this application, the charging response message may be specifically a charging resource creation response message or a charging resource update response message. Details are not described again. The first charging response message may be a response message corresponding to the charging request message in step 430, or may be a response message corresponding to another charging request message.

The charging trigger device receives and parses the first charging response message; obtains, from the first charging response message, a charging processing result provided by the charging processing device; and performs a further operation based on the charging processing result. Specific operations are as follows:
(1) Specifically, if the charging processing result includes the quota granted by the charging processing device and the corresponding first processing indication information, the charging trigger device manages consumption of the quota, obtains a usage amount (a combined usage amount) corresponding to the quota, and sends the usage amount and the redundant flag to the charging processing device by using the second charging request message. Then, the charging processing device receives and parses the second charging request message, and performs redundancy-included charging processing or redundancy-excluded charging processing on the usage amount based on the redundant flag in the second charging request message. If the charging processing result does not include the redundant flag, the charging processing device may perform redundancy-included charging processing or redundancy-excluded charging processing on the usage amount based on the redundant flag locally stored in step 440. For redundancy-included charging processing and redundancy-excluded charging processing, reference may be made to the related descriptions in step 440.
(2) Specifically, if the charging processing result includes the second processing indication information generated by the charging processing device, the charging trigger device performs different processing according to different redundant transmission modes and different redundant usage amount processing modes indicated by the second processing indication information. Details are as follows:
   (2.1) Regardless of whether the redundant transmission mode of the first data connection service is session redundancy, tunnel redundancy, or transport layer redundancy, processing may be performed in the following mode:
   (2.1.1) If the second processing indication information indicates to perform redundancy-excluded usage amount processing for a second data connection service, the charging processing device performs the following operations based on the indication:
      using a half of traffic of redundant transmission used for the second data connection service in the data connection session as a usage amount of the second data connection service, and further consuming, if the second data connection service is an online charged service, the quota granted by the charging processing device by the usage amount of the second data connection service (that is, the half of the traffic of the redundant transmission used for the second data connection service in the data connection session).
   (2.1.2) If the second processing indication information indicates to perform redundancy-included usage amount processing for a second data connection service, the charging processing device performs the following operations based on the indication:
      using the traffic of the redundant transmission used for the second data connection service in the data connection session as a usage amount of the second data connection service, and further consuming, if the second data connection service is an online charged service, the quota granted by the charging processing device by the usage amount of the second data connection service (that is, the traffic of the redundant transmission used for the second data connection service in the data connection session).

In the foregoing two points, in S1 mode, "traffic of redundant transmission used for the second data connection service in the data connection session" is traffic of the second data connection service transmitted in the data connection session, and in S2 or S3 mode, "traffic of redundant transmission used for the second data connection service in the data connection session" is traffic of the second data connection service transmitted between a user plane data gateway and a radio access network device that correspond to the data connection session.

(2.2) If the redundant transmission mode of the first data connection service is tunnel redundancy or transport layer redundancy, processing may be performed in the following mode:
(2.2.1) If the second processing indication information indicates to perform redundancy-excluded usage amount processing for a second data connection service, the charging processing device performs the following operations based on the indication:
   using traffic of the second data connection service transmitted between the user plane data gateway and a data network that correspond to the data connection session as a usage amount of the second data connection service, and further consuming, if the second data connection service is an online charged service, the quota granted by the charging processing device by the usage amount of the second data connection service (that is, the traffic of the second data connection service transmitted between the user plane data gateway and the data network).
(2.2.2) If the second processing indication information indicates to perform redundancy-included usage amount processing for a second data connection service, the charging processing device performs the following operations based on the indication:
   using traffic of the second data connection service transmitted between the user plane data gateway and the radio access network device that correspond to the data connection session as a usage amount of the second data connection service, and further consuming, if the second data connection service is an online charged service, the quota granted by the charging processing device by the usage amount of the second data connection service (that is, the traffic of the second data connection service transmitted between the user plane data gateway and the radio access network device).

(2.3) Regardless of whether the redundant transmission mode of the first data connection service is tunnel redundancy or transport layer redundancy, processing may be further performed in the following mode:
(2.3.1) If the second processing indication information indicates to perform redundancy-excluded usage amount processing for a second data connection service, the charging processing device performs the following operations based on the indication:
using traffic of the second data connection service transmitted through one of two redundant transmission paths that are mutually redundant as a usage amount of the second data connection service; and further consuming, if the second data connection service is an online charged service, the quota granted by the charging processing device by the usage amount of the second data connection service (that is, the traffic of the second data connection service transmitted through one of the two transmission paths that are mutually redundant).

A mode of selecting a transmission path is not limited in this embodiment of this application. The charging trigger device may randomly select one of the two transmission paths, or may select a transmission path with a lower transmission delay. If the two transmission paths are in different network slices, the charging trigger device may further select a transmission path in a network slice with a higher priority. The charging trigger device may obtain the transmission delay of the transmission path from the user plane data gateway.

(2.3.2) If the second processing indication information indicates to perform redundancy-included usage amount processing for a second data connection service, the charging processing device performs the following operations based on the indication:
using traffic of the second data connection service transmitted through the two transmission paths that are mutually redundant as a usage amount of the second data connection service, and further consuming, if the second data connection service is an online charged service, the quota granted by the charging processing device by the usage amount of the second data connection service (that is, the traffic of the second data connection service transmitted through the two transmission paths that are mutually redundant).

In the foregoing two points, "two transmission paths that are mutually redundant ", in S2 mode, refer to two transmission tunnels, and in S3 mode, refer to two transport layer paths.

It can be understood that the traffic is traffic generated within a time interval (or a collection periodicity) between two times of usage amount reporting.

After obtaining the usage amount, the charging trigger device sends the usage amount to the charging processing device by using another charging request message. Optionally, the charging trigger device may further generate usage amount description information for the obtained usage amount (for example, the usage amount corresponding to the rating group in the first data connection service, or the usage amount corresponding to the QoS flow in the first data connection service), and send the usage amount description information together with the obtained usage amount to the charging processing device, where the usage amount description information is used to describe whether the usage amount is traffic on which redundancy-excluded usage amount processing is performed, or describe an occurrence place of the traffic. For example, the usage amount description information indicates any one of the following:
- whether the usage amount is traffic on which redundancy-excluded usage amount processing is performed, which may be specifically: traffic obtained by not performing redundancy-excluded usage amount processing or traffic obtained by performing redundancy-excluded usage amount processing; or
- that the usage amount is traffic on which side of the user plane data gateway, which may be specifically: traffic transmitted between the user plane data gateway and the radio access network device, or traffic transmitted between the user plane data gateway and the data network.

(3) Specifically, if the charging processing result includes no-charging indication information generated by the charging processing device, the charging trigger device ends or suspends charging, for example, quota management, usage amount collection, and communication with the charging processing device for charging processing (for example, requesting a quota from the charging processing device, or sending charging data such as a usage amount).

Optionally, the charging trigger device may monitor a data connection session, and once finding that the data connection session becomes a master data connection session, send a third charging request message to the charging processing device, where the third charging request message includes indication information indicating that the data connection session is the master data connection session, and the indication information may be indicated by using the redundant transmission information described above.

In the foregoing operation steps, a method for obtaining a usage amount of the data connection service by the charging trigger device is not limited. For example, the charging trigger device may obtain the usage amount from a message actively reported by the user plane data gateway, or may send a usage amount obtaining request message to the user plane data gateway, and then obtain the usage amount from a corresponding response message or notification message. Optionally, the usage amount obtaining request message may specify that traffic on which side of the user plane data gateway is required. For example, the request message may include indication information of "NG-GW", indicating that traffic transmitted between the radio access network device and the user plane data gateway needs to be obtained, or include indication information of "GW-DN", indicating that traffic transmitted between the user plane data gateway and the data network needs to be obtained.

The method procedure in FIG. 4B enables the charging processing device to learn of a situation about redundant transmission of a data connection service by using the charging trigger device, and perform charging processing based on the situation about redundant transmission. This helps improve charging accuracy and meets operators' or end users' diversified charging requirements.

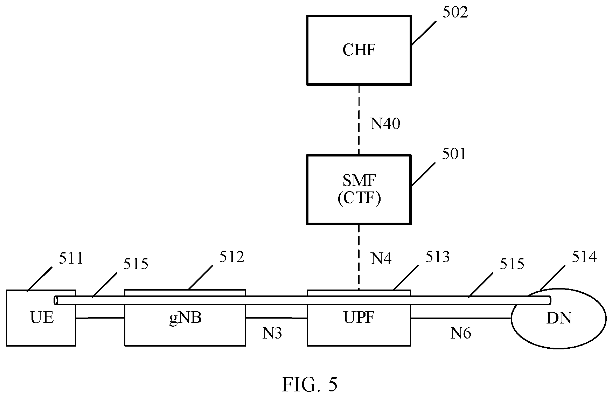

FIG. 5 is an architectural diagram of a second communication system according to an embodiment of this application. The communication system is formed based on the communication system shown in FIG. 4A by using a device defined in the 3GPP standard specification as an example for each device. Specifically, as shown in FIG. 5, an example in which the user equipment 411 is UE 511, the access network device 412 is a gNB 512, the user plane data gateway 413 is a UPF device 513, the data network 414 is a DN 514, the charging trigger device 401 is deployed in an SMF device 501, the charging processing device 402 is a CHF device 502, and the data connection session 415 is a PDU session 515 is used. For example, the UPF device 513 communicates with the gNB 512 through an N3 interface, communicates with the DN 514 through an N6 interface, and communicates with the SMF device 501 through an N4 interface. The SMF device 501 communicates with the CHF device 502 through an N40 interface.

In subsequent embodiments of this application, method procedures are described based on the architecture shown in FIG. 5. Unless otherwise specified, in these method procedures, by default, "SMF" refers to the SMF device 501, "CHF" refers to the CHF device 502, "UE" refers to the UE 511, "gNB" refers to the gNB 512, "UPF" refers to the UPF device 513, "DN" refers to the DN 514, and "PDU session" refers to the PDU session 512. It should be noted that a function of the charging trigger device is deployed on the SMF device 501. Therefore, when a charging-related operation is described, for example, in descriptions related to communication with the CHF, quota management, or usage amount collection, the mentioned "SMF" refers to the "CTF".

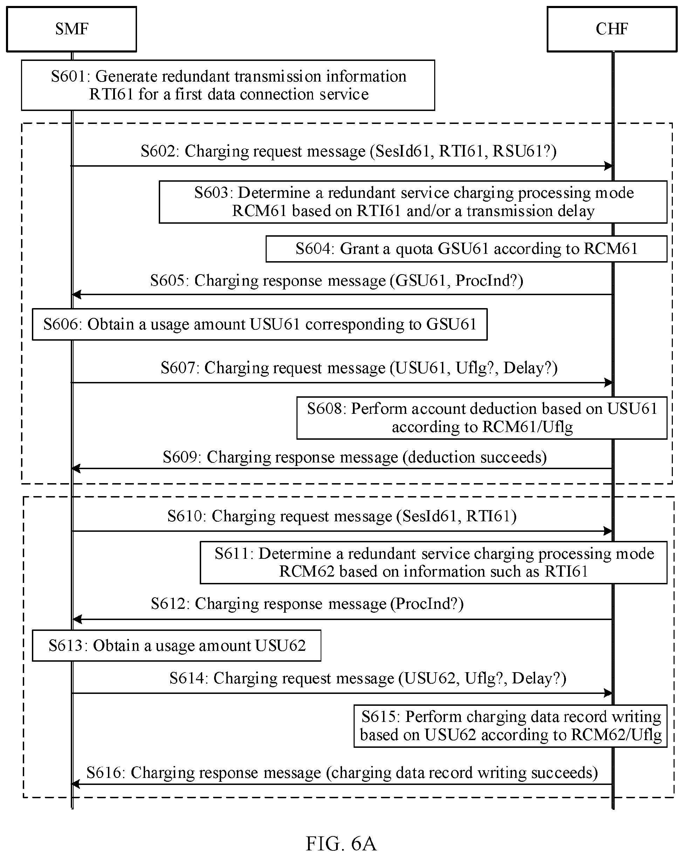

FIG. 6A is a flowchart of a second method for performing charging processing on a redundantly transmitted data connection service according to an embodiment of this application. The method is used to perform charging processing on a first data connection service in a PDU session. A CHF performs redundancy-included charging processing or redundancy-excluded charging processing on a combined usage amount reported by an SMF. A procedure of the method mainly includes the following steps.

Step 601: The SMF generates redundant transmission information RTI61 for the first data connection service.

Specifically, the first data connection service is at a granularity of a PDU session or at a granularity of a QoS flow.

The SMF may determine simply that there is redundant transmission used for the first data connection service, so that the generated RTI61 may indicate simply that transmission used for the first data connection service is redundant transmission. Specifically, "transmission used for the first data connection service is redundant transmission" means that a redundant PDU session is used for the first data connection service for S1 mode, means that a redundant N3/N9 transmission tunnel is used for the first data connection service for S2 mode, and means that a redundant transport layer path is used for the first data connection service for S3 mode.

An example of RTI61 is as follows:
"RedundantIndicator":"True"//indicates that there is redundant transmission used for the first data connection service

The SMF may further determine a redundant transmission mode of the PDU session, so that the generated RTI61 further indicates a redundant transmission mode of the first data connection service. An example of RTI61 is as follows:

```
          "RTI" {
              "RedundantIndicator" : "True"//indicates that there
is redundant transmission used for the first data
              connection service
              "RedundantType" :" 1"//indicates that a
redundant transmission mode of the redundant transmission is
              session redundancy
          }
          or
          "RedundantIndicator" : "2"//indicates that there
 is redundant transmission used for the first data connection
          service and a redundant transmission
mode of the redundant transmission is tunnel redundancy
```

Exemplified methods for determining the redundant transmission mode by the SMF is as follows:
To determine that the redundant transmission mode is S1 mode: The SMF determines, based on a DNN or an S-NSSAI in a PDU session creation request and local configuration information, that the PDU session requires a redundant PDU session, and sends an indication to a radio network access device (for example, the NG-RAN 103) for establishing dual connectivity. If the radio network access device successfully establishes dual connectivities (a response message received by the SMF from the NG-RAN carries a success indication or does not carry a failure indication), the SMF determines that the PDU session is a redundant PDU session.

To determine that the redundant transmission mode is S2 mode: During or after establishment of a QoS flow of a URLLC service, if the SMF determines, based on the DNN or the S-NSSAI in the PDU session creation request and local configuration information, to perform redundant transmission on the first data connection service based on an authorized 5QI (5G QoS Indicator, 5G QoS identifier), a capability of the NG-RAN, and/or operator configuration information, the SMF notifies the PSA UPF over the N4 interface and the NG-RAN over the N2 interface to perform redundant transmission.

To determine that the redundant transmission mode is S3 mode: When the UE establishes a PDU session of a URLLC service, the SMF selects, for the PDU session based on a DNN, an S-NSSAI, a capability of the NG-RAN to support redundant transmission at the transport layer, and the like, a UPF that supports redundant transmission at the transport layer, to establish two mutually redundant transport layer paths between the UPF and the NG-RAN.

Optionally, the generated RTI61 may further indicate that the PDU session is a master PDU session or a secondary PDU session, or indicate related information of another PDU session mutually redundant with the PDU session, for example, an identifier of the another PDU session, or an address or an identifier of a corresponding user plane data gateway. An example of RTI61 is as follows:

```
          "RTI" {
              "RedundantPDUsessionId":"XXXXXXX"//
indicates an identifier of another PDU session mutually
              redundant with the PDU session
          }
```

If the SMF determines that the first data connection service is an online charged service (that is, a data connection service on which online charging needs to be performed), step 602 is performed.

If the SMF determines that the first data connection service is an offline charged service (that is, a data connection service on which offline charging needs to be performed), step 610 is performed.

Step 602: The SMF sends a charging request message to the CHF, where the request message includes RTI61, an identifier SesId61 of the PDU session, and a quota application RSU61 (optional).

Specifically, the SMF constructs a charging request message and sends the charging request message to the CHF, where the charging request message includes RTI61 and SesId61. Optionally, the charging request message further includes RSU61, where RSU61 is used to apply for a quota for one or more rating groups in the first data connection service. Optionally, the charging request message further includes a transmission delay.

Assuming that the charging request message is a charging resource creation request, an example of the message structure is as follows:

```
          ChargingResourceCreateRequest{
              "SesId":"SesId61"//identifier of the PDU session
              "RTI" {//RTI61
                   "RedundantIndicator" :"True"
                   "RTM":" 1"//indicates that a redundant
transmission mode is session redundancy
              "Delay":"XXms"//transmission delay
```

It can be noted that in different redundant transmission modes, correspondences between redundant transmission information RTI and a data connection service are different. For example, in S1 mode or S3 mode, the RTI may correspond to a PDU session identifier; and in S2 mode, the RTI may correspond to a QoS flow identifier.

Optionally, the charging request message may further include a transmission delay of the first data connection service. When the first data connection service corresponds to a PDU session or corresponds to a QoS flow, examples of the transmission delay are respectively represented as follows:
"SesId":" SesId61 "//identifier of the PDU session
"Delay" :"50ms"//a transmission delay corresponding to the PDU session

For ease of description, in this embodiment of this application, a transmission delay corresponding to a PDU session is referred to as a "transmission delay at a granularity of a PDU session".

Alternatively,
"QFI":"Qosflow61"//an identifier (QFI) of a specific QoS flow in the PDU session
"Delay":" 100ms"//a transmission delay corresponding to the QoS flow

For ease of description, in this embodiment of this application, a transmission delay corresponding to a QoS flow is referred to as a "transmission delay at a QoS granularity".

Step 603: The CHF determines a redundant service charging processing mode RCM61 based on RTI61 and/or the transmission delay.

Specifically, the CHF receives and parses the charging request message, and obtains RTI61, SesId61, RSU61 (if any), and the transmission delay (if any) from the charging request message. The CHF determines, based on RTI61, that transmission used for the first data connection service is redundant transmission. The CHF further determines, according to a CHF charging policy or user subscription information and/or the transmission delay (if any), a redundant service charging processing mode RCM61 for the first data connection service. For example, the CHF may determine, based on the RTI and the user subscription information, to apply redundancy-included charging processing for the first data connection service, or may determine to apply redundancy-excluded charging processing for the first data connection service. Alternatively, the CHF may determine, when the transmission delay is greater than a preset threshold, to apply redundancy-included charging processing, and determine, when the transmission delay is less than the preset threshold, to apply redundancy-excluded charging processing.

Step 604: The CHF grants a quota GSU61 according to RCM61.

Specifically, assuming that a quota actually reserved by the CHF in a user account is A, if RCM61 is redundancy-included charging processing, GSU61 is A; and if RCM61 is redundancy-excluded charging processing, GSU61 may be A or 2A.

Optionally, the CHF may further generate corresponding processing indication information ProcInd (corresponding to the foregoing first processing indication information) for GSU61, to indicate the SMF to set a redundant flag for a usage amount corresponding to GSU61, to help the CHF subsequently perform redundancy-included charging processing or redundancy-excluded charging processing by using the usage amount corresponding to GSU61 as a usage amount of a redundantly transmitted data connection service.

Optionally, the CHF may grant the quota to the first data connection service based on RSU61.

Step 605: The CHF returns a charging response message to the SMF, where the response message includes GSU61 and ProcInd (optional).

Specifically, the CHF constructs a charging response message and sends the charging response message to the SMF. The response message includes GSU61. Optionally, the response message further includes ProcInd. If the charging response message does not include ProcInd, the CHF may generate a redundant flag Uflg for GSU61, and locally store an identifier of GSU61 and Uflg in correspondence, where the redundant flag Uflg indicates that a usage amount of GSU61 is the usage amount of the redundantly transmitted data connection service.

An example of the charging response message is as follows:

```
          ChargingResourceCreateResponse{
              "ResId":"ResId61"//charging resource identifier
              "GSU"{//GSU61
                   "RatingGroup":"RG1"//rating group identifier
                   "Volume" : "2M"//quantity of granted quotas
                   "ProcInd":"to set redundant flag for corresponding
USU"//indicate the SMF to set a redundant
                   flag for a corresponding USU
              } }
```

Step 606: The SMF obtains a usage amount USU61 corresponding to GSU61.

Specifically, the SMF receives and parses the charging response message, obtains GSU61 and ProcInd (if any) from the charging response message, consumes GSU61 for the first data connection service, and records a usage amount USU61 of GSU61.

Specifically, for different redundant transmission modes, the SMF may consume quota GSU 61 by a traffic in a "Data traffic" column in Table 1 (the data connection service is the first data connection service), and record a corresponding usage amount USU61. The SMF may send GSU61 to the UPF (to enable the UPF to release service data flows with GSU61 as a limit).

**Table 1**

| Redundant transmission mode | Data traffic |
|---|---|
| S1 | Data traffic of a data connection service transmitted through a UPF within a collection periodicity |
| S2 or S3 | Data traffic of a data connection service transmitted between a UPF and a gNB within a collection periodicity |
| S2 or S3 | Two times the data traffic of a data connection service transmitted between a UPF and a DN within a collection periodicity |

If the charging response message includes ProcInd, the SMF further generates a redundant flag Uflg for USU61, to indicate that USU61 is a usage amount of the redundantly transmitted data connection service.

Step 607: The SMF sends a charging request message to the CHF, where the request message includes USU61, a redundant flag Uflg (optional), and a transmission delay (optional).

Specifically, the SMF constructs a charging request message and sends the charging request message to the CHF. The update request message includes USU61, Uflg (if the CHF previously delivers ProcInd), and a transmission delay (optional).

An example of the charging request message is as follows:

```
          ChargingResourceCreateResponse{
              "ResId":"ResId61"//charging resource identifier
              "USU"{//USU61
                   "RatingGroup":"RG1"//rating group identifier
                   "Volume" : "2M"//usage amount
                   "Uflg":"USU for service with
                redundant transmission"//indicates that USU61 is a usage amount
                   of a redundantly transmitted data connection service
                   "Delay":"XXms"//transmission delay
```

It can be understood that Uflg corresponds to USU61, and a specific data structure is not limited.

Optionally, the charging request message further includes a transmission delay, and the transmission delay is a transmission delay at a granularity of a PDU session or a transmission delay at a granularity of a QoS flow in a reporting period corresponding to sending the charging request message. Optionally, the transmission delay may correspond to a PDU session identifier, a QoS flow identifier, or a rating group in the charging request message.

Step 608: The CHF performs account deduction based on USU61 according to RCM61/Uflg.

Specifically, the CHF receives the charging request message from the SMF, parses the charging request message, and obtains USU61, Uflg (if any), and the transmission delay (optional) from the charging request message. Then, the CHF performs account deduction based on USU61 according to RCM61/Uflg/the delay.

Specifically, if USU61 has a corresponding Uflg (redundant flag), the CHF determines that USU61 is a usage amount of a redundantly transmitted data connection service, and further determines that account deduction needs to be performed on USU61 according to RCM61. If RCM61 is redundancy-included charging processing, the CHF deducts a usage amount (2 MB) corresponding to USU61 or a corresponding fee from an account corresponding to a rating group RG1. If RCM61 is redundancy-excluded charging processing, the CHF deducts a half of the usage amount corresponding to USU61 or a corresponding fee from the account.

The CHF indicates, by using ProcInd, the SMF to set a redundant flag Uflg for USU61, so that whether the usage amount is a usage amount including redundant traffic can be more accurately identified, and then a quota is granted flexibly and usage amount processing is flexibly performed based on a charging requirement of redundant transmission. For example, redundancy-included charging processing or redundancy-excluded charging processing is performed only on some data connection services, and other data connection services are charged in a conventional charging mode.

Optionally, the CHF may further determine, based on the transmission delay, a charge rate used in the account deduction process.

Step 609: The CHF sends a charging response message to the SMF, where the response message includes indication information indicating that the account deduction succeeds. If there is a granted quota, step 609 is the same as step 605.

Then, the SMF may continuously apply to the CHF for a quota and/or report a new usage amount to the CHF by using the charging request message.

Step 610: The SMF sends a charging request message to the CHF, where the request message includes RTI61 and an identifier SesId61 of the PDU session.

Specifically, the SMF constructs a charging request message and sends the charging request message to the CHF. The charging request message includes RTI61 and SesId61, and optionally, further includes a transmission delay.

Assuming that the charging request message is a charging resource creation request, an example of the message is as follows:

```
          ChargingResourceCreateRequest{
              "SesId":"SesId61"//identifier of the PDU session
              "RTI" {//RTI61
                   "Redundant": " True"
                   "RTM":"S3" //indicates that a redundant
                transmission mode is transport layer redundancy
              }
              "Delay":"30ms"//transmission delay
```

It can be noted that in different redundant transmission modes, correspondences between redundant transmission information RTI and a data connection service are different. For example, in S1 mode or S3 mode, the RTI may correspond to a PDU session identifier; and in S2 mode, the RTI may correspond to a QoS flow identifier.

Step 611: The CHF determines a redundant service charging processing mode RCM62 based on information such as RTI61.

This step is similar to step 603, and details are not described again.

Step 612: The CHF returns a charging response message to the SMF, where optionally, the response message includes ProcInd.

This step is similar to step 605 (except that no quota is granted), and details are not described again.

An example of the charging response message is as follows:

```
          ChargingResourceCreateResponse{
              "ResId":"ResId61"//charging resource identifier
```

Optionally, the CHF may further include processing indication information ProcInd in the response message, to indicate the SMF to set a redundant flag Uflg for the usage amount reported by the CHF. Different from ProcInd in step 605, where ProcInd in step 605 corresponds to a quota granted to a rating group, ProcInd herein may correspond to a specific rating group, several rating groups, or all rating groups of the first data connection service.

Step 613: The SMF obtains a usage amount USU62.

A mode in which the SMF obtains the usage amount USU62 is the same as the mode in which the SMF obtains the usage amount USU61 in step 606, and details are not described again.

Optionally, if the charging response message further includes ProcInd, the SMF may further generate a redundant flag Uflg for USU62, to indicate that USU62 is a usage amount of the redundantly transmitted data connection service.

Step 614: The SMF sends a charging request message to the CHF, where the request message includes USU62, a redundant flag Uflg (optional), and a transmission delay (optional).

Specifically, the SMF constructs a charging request message and sends the charging request message to the CHF. The update request message includes ResId61, USU61, Uflg (optional), and a transmission delay (optional).

An example of the charging request message is as follows:

```
          ChargingResourceCreateRequest{
              "ResId":"ResId61"//charging resource identifier
              "USU"{//USU62
                   "RatingGroup":"RG1"//rating group identifier
                   "Volume": "4M"//usage amount
                   "Uflg":"USU for service with redundant
                transmission"//indicates that USU62 is a usage amount
                   of a redundantly transmitted data connection service
                   "Delay":"30ms"//transmission delay
```

Step 615: The CHF performs charging data record writing based on USU62 according to RCM62/Uflg.

Specifically, the CHF receives the charging request message from the SMF, parses the charging request message, and obtains USU62, Uflg (if any), and the transmission delay (if any) from the charging request message. Further, the CHF writes the redundant transmission information, the usage amount, the usage amount description information, or the transmission delay into a charging data record of the PDU session.

Specifically, if USU62 has a corresponding Uflg, the CHF determines that USU62 is a usage amount of a redundantly transmitted data connection service, and further determines that the charging data record writing needs to be performed on USU62 according to RCM62. If RCM62 is redundancy-included charging processing, the CHF writes a usage amount (4 MB) corresponding to USU62 in the charging data record. If RCM62 is redundancy-excluded charging processing, the CHF writes a half of the usage amount corresponding to USU62 to the charging data record. If the charging data record does not exist, the CHF creates the charging data record.

Optionally, the CHF may also write USU62 and any one or more of RTI61, RCM62, or Uflg into the charging data record.

Step 616: The CHF sends a charging response message to the SMF, where the response message includes indication information indicating that the charging data record writing succeeds.

Then, the SMF may continuously report a new usage amount to the CHF by using the charging request message until the PDU session is interrupted, and the procedure ends.

The method procedure corresponding to FIG. 6A enables the CHF to perceive existence of redundant transmission in time based on information reported by the SMF, and perform, based on the redundant transmission, redundancy-excluded charging processing or redundancy-included charging processing on the combined usage amount reported by the SMF, which can avoid the problem of inaccurate charging caused by redundant transmission, and can also meet diversified charging requirements.

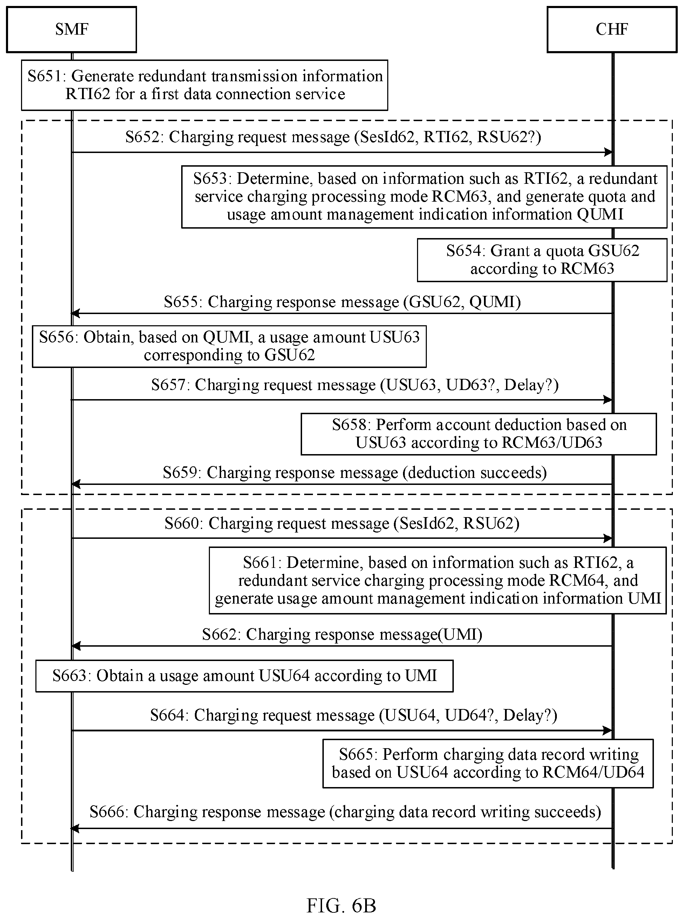

FIG. 6B is a flowchart of a third method for performing charging processing on a redundantly transmitted data connection service according to an embodiment of this application. The method is used to perform charging processing on a first data connection service in a PDU session. An SMF performs redundancy-excluded usage amount processing or redundancy-included usage amount processing, so that a CHF can perform redundancy-excluded charging processing or redundancy-included charging processing. A procedure of the method mainly includes the following steps.

Step 651: The SMF generates redundant transmission information RTI62 for the first data connection service.

This step is similar to step 601, and details are not described again.

If the SMF determines that QF2 is an online charged service, step 652 is performed.

If the SMF determines that QF2 is an offline charged service, step 660 is performed.

Step 652: The SMF sends a charging request message to the CHF, where the request message includes an identifier SesId62 of a PDU session, RTI62, and a quota application RSU62 (optional).

This step is similar to step 602, and details are not described again. Optionally, the charging request message may further include a transmission delay.

Assuming that the charging request message is a charging resource creation request, an example of the message is as follows:

```
          ChargingResourceCreateRequest{
              "SesId":"SesId62"//identifier of the PDU session
              "RTI" {//RTI62
                   "RedundantIndicator" :"True"//indicates
                 that the PDU session is a redundant PDU session
                   "RTM":"S2"//indicates that a redundant transmission mode is tunnel redundancy
```

Step 653: The CHF determines, based on RTI62 and/or a transmission delay, a redundant service charging processing mode RCM63, and generates quota and usage amount management indication information QUMI.

Specifically, the CHF receives and parses the charging request message, and obtains RTI62, SesId62, RSU62 (if any), and the transmission delay (if any) from the charging request message. The CHF determines, based on RTI62, that transmission used for the first data connection service is redundant transmission. The CHF further determines, according to a charging policy or user subscription information, the redundant service charging processing mode RCM63 for the data connection service. For example, RCM63 may be determined as redundancy-included charging processing, or may be determined as redundancy-excluded charging processing.

Further, the CHF generates quota and usage amount management indication information QUMI (corresponding to the foregoing "second processing indication information") based on RCM63, to indicate the SMF to perform redundant usage amount processing in a specific mode on a second data connection service. If RCM63 is redundancy-included charging processing, QUMI indicates the SMF to perform redundancy-included usage amount processing for a second data connection service. If RCM63 is redundancy-excluded charging processing, QUMI indicates the SMF to perform redundancy-excluded usage amount processing for a second data connection service.

If a redundant transmission mode of the first data connection service is session redundancy or transport layer redundancy, the second data connection service corresponds to a rating group in the first data connection service, or corresponds to a QoS flow in the first data connection service, or corresponds to the data connection session corresponding to the first data connection service.

The redundant transmission mode of the first data connection service is tunnel redundancy, and the second data connection service corresponds to a rating group in the first data connection service or corresponds to a QoS flow corresponding to the first data connection service.

It can be understood that QUMI may correspond to all data connection services in the PDU session, or may correspond to one or more QoS flows in the PDU session, or may correspond to a service data flow corresponding to a specific service identifier in a QoS flow in the PDU session, or may correspond to a rating group in the PDU session. For example, assuming that charging processing is performed on a QoS flow QF2 in the PDU session, QUMI may correspond to some service data flows in the QoS flow QF2, for example, several service data flows corresponding to a rating group in the QoS flow QF2. "Correspondence" herein means "a function range", that is, QUMI indicates a range in which the SMF performs redundant usage amount processing in a specific mode on a data connection service. In this way, the CHF may deliver QUMI for some service data flows in a redundantly transmitted data connection service.

Step 654: The CHF grants a quota GSU62 according to RCM63.

Specifically, the CHF grants a quota GSU62 to the first data connection service based on RSU62.

Specifically, assuming that a quota actually reserved by the CHF in a user account is A, if RCM63 is redundancy-included charging processing, GSU62 is A; and if RCM63 is redundancy-excluded charging processing, GSU62 may be A or 2A.

Optionally, the CHF may grant the quota GSU62 to the first data connection service based on RSU62.

Step 655: The CHF returns a charging response message to the SMF, where the response message includes GSU62 and QUMI.

Specifically, the CHF constructs a charging response message and sends the charging response message to the SMF. The response message includes GSU62 and QUMI.

An example of the charging response message is as follows:

```
          ChargingResourceCreateResponse{
              "ResId":"ResId62"//charging resource identifier
              "GSU"{//GSU62
                   "QoSFlow":"QF2"//QoS flow identifier
                   "Volume":"8M"//quantity of granted quotas
                   "QUMI":"To prepare USU for charging
                with redundant volume" //indicates the SMF to perform
                   redundancy-included usage amount processing
            to meet a requirement of redundancy-included charging processing
       or
                   "QUMI":"To prepare USU for charging
                 without redundant volume"//indicates the SMF to
                   perform redundancy-excluded usage
                amount processing to meet a requirement of redundancy-excluded charging
                   processing
```

Step 656: The SMF obtains, based on QUMI, a usage amount USU63 corresponding to GSU62.

Specifically, the SMF receives and parses the charging response message in the foregoing step, obtains GSU62 and QUMI from the charging response message, further consumes GSU62 for the data connection service based on QUMI, and records a corresponding usage amount USU63.

Specifically, for different pieces of quota and usage amount management indication information and different redundant transmission modes, the SMF may consume quota GSU62 by a traffic in a "Data traffic" column in Table 2 (the data connection service is the second data connection service), and record a corresponding usage amount USU63. The SMF may send GSU62 to a UPF, so that the UPF releases a service data flow of the second data connection service with GSU62 as a limit, and obtains, based on a message reported by the UPF, data traffic shown in the "Data traffic" column in Table 2.

**Table 2**

| Quota and usage amount management indication information | Redundant transmission mode | Data traffic |
|---|---|---|
| Indicate an SMF to perform redundancy-excluded usage amount processing | S1 | Half of data traffic of a data connection service transmitted through a UPF within a collection periodicity |
| | S2 or S3 | Data traffic of a data connection service transmitted between a UPF and a DN within a collection periodicity |
| | S2 or S3 | Half of data traffic of a data connection service transmitted between a gNB and a UPF within a collection periodicity |
| | S2 | Data traffic of a data connection service transmitted in one of two mutually redundant tunnels within a collection periodicity (for tunnel selection, an SMF may randomly select one of the two tunnels, or may select a tunnel with a smaller transmission delay, and the SMF may separately obtain a transmission delay of each tunnel by using a message sent by a UPF) |
| | S3 | Data traffic of a data connection service transmitted on one of two mutually redundant transport layer paths within a collection periodicity (for transport layer path selection, an SMF may randomly select one of the two transport layer paths, or may select a transport layer path with a smaller transmission delay, and the SMF may separately obtain a transmission delay of each transport layer path by using a message sent by a UPF) |
| Indicate an SMF to perform redundancy-included usage amount processing | S1 | Data traffic of a data connection service transmitted in a UPF within a collection periodicity |
| | S2 or S3 | Data traffic of a data connection service transmitted in two mutually redundant tunnels within a collection periodicity, or data traffic of a data connection service transmitted on two mutually redundant transport layer paths within a collection periodicity |
| | S2 or S3 | Data traffic of a data connection service transmitted between a UPF and a gNB within a collection periodicity |

Optionally, the SMF further generates usage amount description information UD63 for USU63. UD63 indicates that the usage amount is any one of the following:
- traffic obtained by not performing redundancy-excluded usage amount processing,
- traffic obtained by performing redundancy-excluded usage amount processing,
- traffic transmitted between the user plane data gateway and the radio access network device, or
- traffic transmitted between the user plane data gateway and the data network.

UD63 may indicate the foregoing four types of information, or in more detail, may further include information in the "Data traffic" column in Table 2.

For an example of UD63, refer to step 657.

Step 657: The SMF sends a charging request message to the CHF, where the request message includes USU63, UD63 (optional), and a transmission delay Delay (optional).

Specifically, the SMF constructs a charging request message and sends the charging request message to the CHF. The update request message includes USU63, UD63 (optional), and a transmission delay (optional).

An example of the charging request message is as follows:

```
          ChargingResourceUpdateRequest{
              "ResId" : "ResId62"//charging resource identifier
              "USU"{//USU63
                   "QoSFlow":"QF2"//QoS flow identifier
                   "Volume":"8M" //specific traffic of USU63
                   "UD":"-UPF-/2"//indicates that the foregoing
                 8M is a half of traffic transmitted in the UPF
                   "Delay":"XXXms"//transmission delay
```

UD63 of a USU obtained by performing redundancy-excluded usage amount processing may also have the following forms:
"UD":"UPF-DN"//indicates that the foregoing 8M is traffic transmitted between the UPF and the DN
"UD":"gNB-UPF/2"//indicates that the foregoing 8M is a half of traffic transmitted between the UPF and the gNB
"UD":"1 N3 Tunnel"//indicates that the foregoing 8M is traffic transmitted in one of two N3 tunnels
"UD":" 1 TL path"//indicates that the foregoing 8M is traffic transmitted on one of two transport layer paths

UD63 of a USU obtained by performing redundancy-included usage amount processing may have the following forms:
"UD":"-UPF-"//indicates that the foregoing 8M is traffic transmitted in the UPF
"UD":"gNB-UPF"//indicates that the foregoing 8M is traffic between the gNB and the UPF.
"UD":"2*UPF-DN"//indicates that the foregoing 8M is two times the traffic transmitted between the UPF and the DN
"UD" :"2 N3 Tunnels"//indicates that the foregoing 8M is traffic transmitted on two N3 tunnels
"UD":"2 TL paths"//indicates that the foregoing 8M is traffic transmitted on two transport layer paths

It can be understood that UD63 may be inside a data structure corresponding to USU63, or may be parallel to the data structure corresponding to USU63.

Optionally, the charging request message further includes a transmission delay. For details, refer to related descriptions in step 607.

Step 658: The CHF performs account deduction based on USU63/UD63 according to RCM63.

Specifically, the CHF receives the charging resource update request message from the SMF, parses the charging resource update request message, and obtains USU63, UD63 (if any), and the transmission delay (optional) from the charging resource update request message. Further, the CHF performs account deduction based on USU63 according to RCM63/UD63/the transmission delay.

Specifically, the CHF determines, based on UD63, that the specific traffic (8 MB) in USU63 is obtained by the SMF by executing QUMI indication previously delivered by the CHF, and then directly deducts the traffic (8 MB) corresponding to USU63 or a corresponding fee from an account corresponding to the QoS flow QF2. If the charging resource update request message does not include UD63, the CHF considers by default that the specific traffic (8 MB) in USU63 is obtained by the SMF by performing redundancy-included usage amount processing. Further, if RCM63 is redundancy-excluded charging processing, the CHF deducts a half (that is, 4 MB) of the traffic (8 MB) corresponding to USU63 or a half of the corresponding fee from the account corresponding to the QoS flow QF2.

Optionally, the CHF may determine, based on the transmission delay, a charge rate used in the account deduction. For example, a higher charge rate is used for a usage amount corresponding to a lower delay.

Step 659: The CHF sends a charging resource update response message to the SMF, where the response message includes indication information indicating that the account deduction succeeds. If there is a granted quota, step 659 is the same as step 654.

Then, the SMF may continuously apply to the CHF for a quota and/or report a new usage amount to the CHF by using the charging resource update request message.

Step 660: The SMF sends a charging request message to the CHF, where the request message includes RTI62 and an identifier SesId62 of the PDU session.

This step is similar to step 610, and details are not described again.

Step 661: The CHF determines a redundant service charging processing mode RCM64 based on RTI62, and generates usage amount management indication information UMI

Upon comparison with step 653 and comparison between UMI and QUMI, UMI is used in an offline charging mode, QUMI is used in an online charging mode, and other steps are similar to step 653.

Step 662: The CHF returns a charging response message to the SMF, where the response message includes charging processing result information of the CHF and UMI.

This step is similar to step 654 (except that no quota is granted), and details are not described again.

Step 663: The SMF obtains a usage amount USU64 based on UMI.

Specifically, the SMF receives the charging response message, parses the charging response message, obtains UMI from the charging response message, and further obtains the usage amount USU64 based on UMI. The method for obtaining USU64 by the SMF is the same as that in step 654, and details are not described again.

Optionally, the SMF further generates usage amount description information UD64 for USU64. For details, refer to related descriptions in step 654.

Step 664: The SMF sends a charging resource update request message to the CHF, where the request message includes ResId62, USU64, UD64 (optional), and a transmission delay Delay (optional).

Specifically, the SMF constructs a charging resource update request message and sends the charging resource update request message to the CHF. The update request message includes ResId62, USU64, UD64 (optional), and a transmission delay (optional).

An example of the charging resource update request message is as follows:

```
          ChargingResourceUpdateRequest{
              "ResId" : "ResId62"//charging resource identifier
              "USU"{//USU64
                   "QoSFlow":"QF2"//QoS flow identifier
                   "Volume" :"8M"//specific traffic of USU64
                   "UD":"UPF-DN"//UD64, indicating that the
                foregoing 8M is traffic transmitted between the UPF
                   and the DN
                   "Delay":"XXms"//transmission delay
```

For more examples of UD64, refer to related descriptions in step 657.

Step 665: The CHF performs charging data record writing based on USU64 according to RCM64/UD64.

Specifically, the CHF receives the charging resource update request message from the SMF, parses the charging resource update request message, and obtains USU64, UD64 (if any), and the transmission delay (optional) from the charging resource update request message. Further, the CHF writes the redundant transmission information, the usage amount, the usage amount description information, or the transmission delay into a charging data record corresponding to the PDU session.

Specifically, the CHF determines, based on UD64, that the specific traffic (8 MB) in USU64 is obtained by the SMF by executing UMI indication previously delivered by the CHF, and then directly writes the traffic (8 MB) corresponding to USU64 into the charging data record. If the charging resource update request message does not include UD64, the CHF considers by default that the specific traffic (8 MB) in USU64 is obtained by the SMF by performing redundancy-included usage amount processing. Further, if RCM64 is redundancy-excluded charging processing, the CHF writes a half (that is, 4 MB) of the traffic (8 MB) corresponding to USU64 into the charging data record corresponding to the PDU session. If the charging data record does not exist, the CHF creates the charging data record.

Optionally, the CHF may also write USU64 and any one or more of RTI62, RCM64, or UD64 into the charging data record.

Step 666: The CHF sends a charging resource update response message to the SMF, where the response message includes indication information indicating that the charging data record writing succeeds.

Then, the SMF may continuously report a new usage amount to the CHF by using the charging resource update request message until the PDU session is interrupted, and the procedure ends.

The method procedure corresponding to FIG. 6B enables the CHF to not only perceive existence of redundant transmission in time based on information reported by the SMF, but also indicate, for some service data flows in a data connection service, the SMF to report traffic on which redundancy-included usage amount processing has been performed or traffic on which redundancy-excluded usage amount processing has been performed, which can save unnecessary performance overheads on the SMF, and can also reduce bandwidth consumption between the SMF and the CHF. In addition, because the usage amount is collected on demand by the SMF that directly interacts with the UPF, charging accuracy can also be improved to some extent.

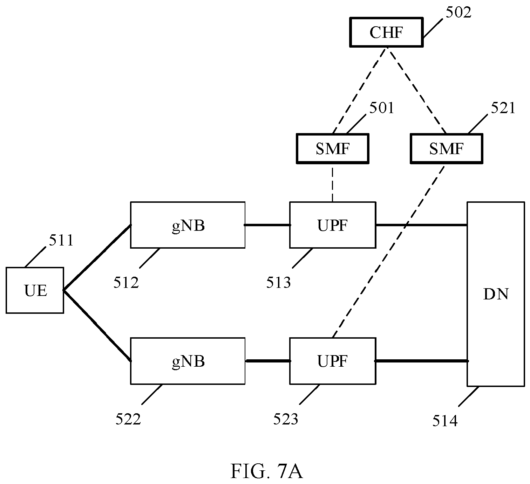

FIG. 7A is an architectural diagram of a third communication system according to an embodiment of this application. This communication system is obtained by adding a gNB 522, a UPF 523, and an SMF 521 to the communication system shown in FIG. 5. In this way, a second PDU session, namely, a PDU session between UE 511-gNB 522-UPF 523-DN 514, can be established between UE and a DN. For ease of differentiation, the PDU session is referred to as a PDU session 2, the PDU session 515 is referred to as a PDU session 1, the SMF 501 is referred to as SMF1, and the SMF 521 is referred to as SMF2.

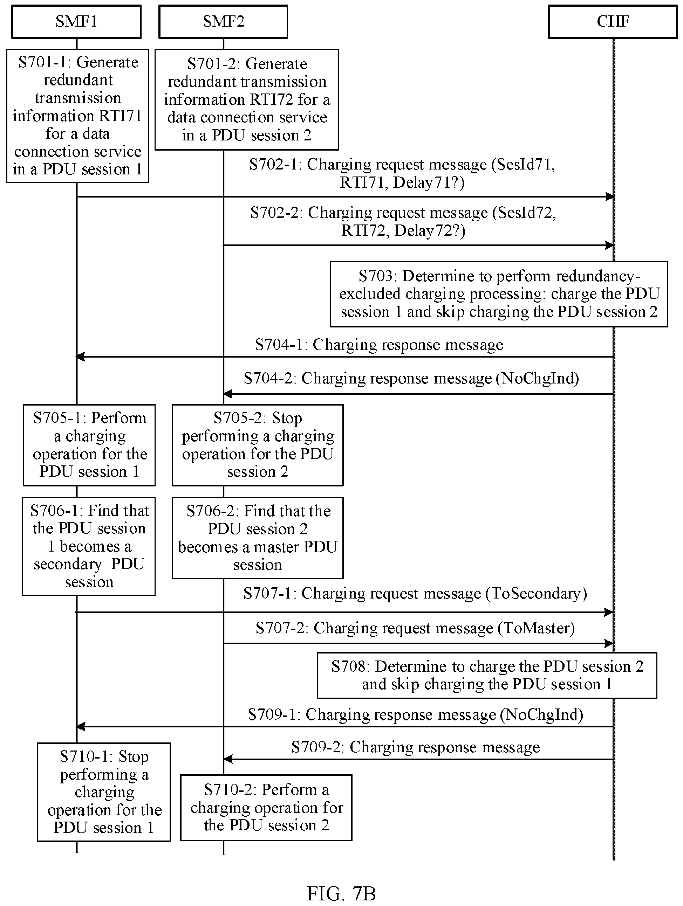

FIG. 7B is a flowchart of a fourth method for performing charging processing on a redundantly transmitted data connection service according to an embodiment of this application. The method procedure is implemented based on the architecture shown in FIG. 7A. Assuming that a PDU session 1 and a PDU session 2 are mutually redundant PDU sessions, a CHF performs redundancy-excluded charging processing on the PDU session 1 and the PDU session 2, and selects one of the PDU session 1 and the PDU session 2 for charging processing. The method procedure mainly includes the following steps.

Step 701-1: SMF1 generates redundant transmission information RTI71 for a data connection service in the PDU session 1.

Step 701-2: SMF2 generates redundant transmission information RTI72 for a data connection service in the PDU session 2.

The foregoing two steps are similar to step 601, and details are not described again.

Step 702-1: SMF1 sends a charging request message to the CHF, where the request message includes RTI71, an identifier SesId71 of the PDU session 1, and a transmission delay Delay71 (optional).

Specifically, if determining to perform charging on the PDU session 1 that is mutual redundancy of the PDU session 2, SMF1 sends a charging request message to the CHF.

This step is similar to step 660, and details are not described again.

An example of the charging resource creation request message is as follows:

```
          ChargingResourceCreateRequest{
              "SesId": "SesId71"//identifier of the PDU session 1
              "RTI" {//RTI71
                   "RTM": "S1"//indicates that a
redundant transmission mode is session redundancy
                   "RoleInRT": "Master"//indicates that a
                role of the PDU session 1 in redundant transmission is a
                   master PDU session/active PDU session
              }
          or
          ChargingResourceCreateRequest{
              "SesId": "SesId71"//identifier of the PDU session 1
              "RTI" {//RTI71
                   "RTM": "S1"//indicates that a
                redundant transmission mode is session redundancy
                   "SiblingSession":"SesId72"//indicates
                an identifier of another PDU session (an identifier of a
                   PDU session 2) in mutual redundancy
                   "NSId" : "NetworkSliceId1"//an identifier
                of a network slice which the PDU session 1 is in
              }
              "Delay":"30ms"//Delay71, a delay of the PDU session 1 between the UE and the UPF
```

A master PDU session is a PDU session corresponding to a master NG-RAN, and a secondary PDU session is a PDU session corresponding to a secondary NG-RAN.

Subsequently, the CHF receives and parses the charging request message in this step, obtains SedId71 and RTI71 from the charging request message, and determines, based on information such as RTI71, to perform redundancy-excluded charging processing on the PDU session 1.

If the CHF determines to perform redundancy-included charging processing on the PDU session 1, for a further operation, refer to the method procedure corresponding to FIG. 6A or FIG. 6B.

Step 702-2: SMF2 sends a charging request message to the CHF, where the request message includes RTI72, an identifier SesId72 of the PDU session 2, and a transmission delay Delay72 (optional).

Specifically, if SMF2 determines to perform charging on the PDU session 1 in mutual redundancy, SMF2 does not send a charging request message to the CHF. In this case, it means that for the two PDU sessions that are mutually redundant, SMF2 performs charging only on the PDU session 1. Alternatively, if SMF2 determines to perform charging on the PDU session 2 in mutual redundancy, SMF2 sends a charging request message to the CHF.

This step is similar to step 660, and details are not described again.

An example of the charging resource creation request message is as follows:

```
          ChargingResourceCreateRequest{
              "SesId": "SesId72"//identifier of the PDU session 2
              "RTI" {//RTI72
                   "RTM": "S1"//indicates that a redundant
                 transmission mode is session redundancy
                   "RoleInRT":"Secondary"//indicates
                that a role of the PDU session 2 in redundant transmission
                   is a secondary PDU session/slave PDU session/standby PDU session
              } }
          or
          ChargingResourceCreateRequest{
              "SesId": "SesId72"//identifier of the PDU session 1
              "RTI" {//RTI72
                   "RTM": "S1"//indicates that a
                redundant transmission mode is session redundancy
                   "SiblingSession":"SesId71"//indicates
                an identifier of another PDU session (an identifier of a
                   PDU session 1) in mutual redundancy
                   "NSId" : "NetworkSliceId2"//an identifier
                 of a network slice which the PDU session 2 is in
              }
              "Delay":"50ms"//Delay72, a delay of the PDU session 2 between the UE and the UPF
```

Subsequently, the CHF receives and parses the charging resource creation request message in the step, obtains SedId72 and RTI72 from the charging resource creation request message, and determines, based on RTI72 and a charging policy, to perform redundancy-excluded charging processing on the PDU session 2.

Step 703: The CHF determines to perform redundancy-excluded charging processing: charging the PDU session 1 and skipping charging the PDU session 2.

Specifically, if RTI71 or RTI72 includes a "RoleInRT" field (indicating a role of a corresponding PDU session in redundant transmission: a master PDU session or a secondary PDU session), the CHF may determine, based on information indicated by the field, which PDU session is to be charged. Generally, the CHF decides to charge the master PDU session but skip charging the secondary PDU session. Therefore, the CHF sends "no charging" indication information NoChgInd to SMF2 (the CHF may send NoChgInd when receiving only the charging resource creation request message in step 702-2).

Specifically, if RTI71 or RTI72 includes a "SiblingSession" field, the CHF may determine, according to the field, a PDU session for charging. For example, the CHF may randomly select a PDU session for charging. If RTI71 or RTI72 also includes a "Delay" field (indicating a delay of a corresponding PDU session between the UE and the corresponding UPF), after receiving both charging resource creation request messages, the CHF may compare delays of the two PDU sessions, and select a PDU session with a smaller delay for charging. If RTI71 or the RTI72 further includes an "NSId" field (indicating an identifier of a network slice which a corresponding PDU session is in), after receiving both charging resource creation request messages, the CHF may obtain, based on the "NSId" field, priority information of a network slice which each PDU session is in (for example, query a network slice management device for the priority information), and then select a PDU session in a network slice with a higher priority for charging. After such determining, the CHF sends "no charging" indication information NoChgInd to an SMF corresponding to the PDU session that does not need to be charged.

It can be understood that a form of the "no charging" indication information is not limited in this embodiment of this application.

It can be understood that, in this embodiment of this application, if the CHF determines to charge both the PDU session 1 and the PDU session 2, for processing performed by the CHF, refer to embodiments corresponding to FIG. 6A and FIG. 6B.

It is assumed below that the CHF decides to charge the PDU session 1 and skip charging the PDU session 2.

Step 704-1: The CHF sends a charging resource creation response message to SMF1.

Specifically, the CHF constructs a charging resource creation response message and sends the charging resource creation response message to SMF 1.

Step 704-2: The CHF sends a charging resource creation response message to SMF2, where the response message includes NoChgInd.

Specifically, the CHF constructs a charging resource creation response message and sends the charging resource creation response message to SMF2, where the response message includes NoChgInd.

Step 705-1: SMF1 performs a charging operation for the PDU session 1.

Specifically, SMF1 performs a charging-related operation for the PDU session 1, for example, applies to the CHF for a quota for a data connection service in the PDU session 1, and reports a usage amount of the data connection service in the PDU session 1 to the CHF.

Step 705-2: SMF2 stops performing a charging operation for the PDU session 2.

Specifically, SMF2 ends or suspends charging for the PDU session 2.

Step 706-1: SMF1 finds that the PDU session 1 becomes a secondary PDU session.

Specifically, SMF 1 determines, based on the information sent by the UE, that the PDU session 1 becomes a secondary PDU session.

Step 706-2: SMF2 finds that the PDU session 2 becomes a master PDU session.

Specifically, SMF2 determines, based on information sent by UE, that the PDU session 2 becomes a master PDU session.

Step 707-1: SMF1 sends a charging resource update request message to the CHF, where the request message includes indication information ToSecondary indicating "becoming a secondary PDU session".

Step 707-2: SMF2 sends a charging resource update request message to the CHF, where the request message includes indication information ToMaster indicating that the PDU session becomes a master PDU session.

Step 708: The CHF determines to charge the PDU session 2 and skip charging the PDU session 1.

This step is similar to step 703, and details are not described again.

Step 709-1: The CHF sends a charging resource update response message to SMF1, where the response message includes NoChgInd.

Step 709-2: The CHF sends a charging resource update response message to SMF2.

Step 710-1: SMF1 stops performing the charging operation for the PDU session 1.

This step is similar to step 705-2, and details are not described again.

Step 710-2: SMF2 performs a charging operation for the PDU session 2.

This step is similar to step 705-1, and details are not described again.

It can be understood that a sequence between the foregoing steps is illustrative, rather than limitative. For example, a sequence between step 702-1 and step 702-2, a sequence between step 704-2 and step 704-2, and a sequence between step 705-1 and step 705-2 may be reversed.

The method procedure corresponding to FIG. 7B enables the CHF to select one PDU session from two mutually redundant PDU sessions for charging processing. This can reduce performance overheads of the SMF, and can also reduce bandwidth consumption between the SMF and the CHF.

It can be understood that technical solutions of the foregoing different method procedures may be freely combined. For example, the usage amount description information in FIG. 6B may also be used in the method procedure in FIG. 6A.

It should be further noted that in embodiments of this application, "two-path redundancy" is used as an example for descriptions of all the solutions. To be specific, there are two PDU sessions in S1 mode, there are two transmission tunnels in S2 mode, and there are two transport layer paths in S3 mode. With the improvement of the reliability requirement, there may be a "multi-path redundancy" solution, and a person skilled in the art may extend the solution to support the "multi-path redundancy" solution based on the "two-path redundancy" solution. For example, assuming that a total quantity of mutually redundant paths is R, in embodiments of this application, in performing redundancy-excluded usage amount processing in a "halving" manner (for example, step 609, step 615, and step 656), a ratio may be adjusted to (R-1)/R, and redundancy-excluded usage amount processing performed by "selecting one from two (for example, step 656 and step 663) may be changed to redundancy-excluded usage amount processing performed by "selecting one from R". For example, one tunnel is selected from R mutually redundant N3 tunnels, or one PDU session is selected from R mutually redundant PDU sessions. Details are not described again.

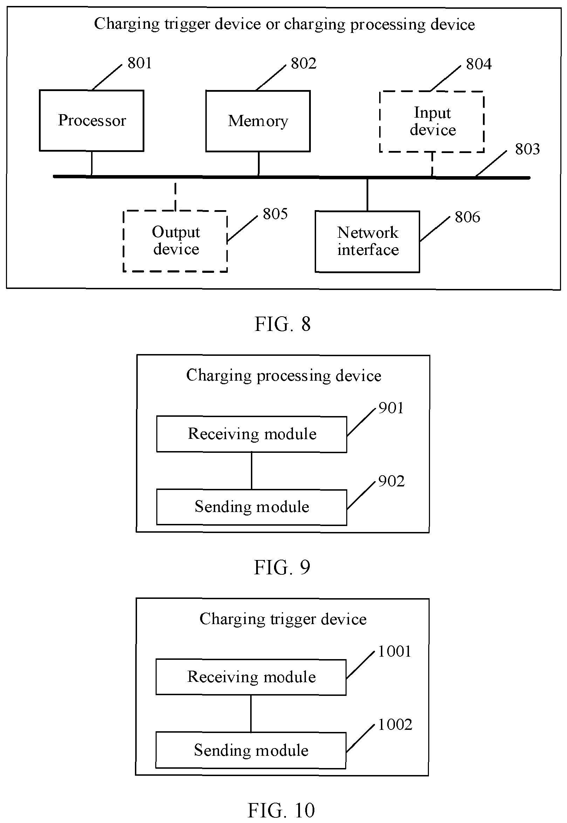

FIG. 8 is a structural diagram of hardware of a charging trigger device and a charging processing device according to an embodiment of this application. All charging trigger devices (or an SMF device and a CTF device, for example, 430 in FIG. 4B) and a charging processing device (or a CHF device, for example, 440 in FIG. 4B) in embodiments of this application may be implemented by using a general-purpose computer hardware structure shown in FIG. 8. The charging trigger devices include a processor 801, a memory 802, a bus 803, an input device 804, an output device 805, and a network interface 806. The input device 804 and the output device 805 are optional.

Specifically, the memory 802 may include a computer storage medium in a form of a volatile memory and/or a non-volatile memory, for example, a read-only memory and/or a random access memory. The memory 802 may store an operating system, an application program, another program module, executable code, and program data.

The input device 804 may be configured to input information, so that a system administrator can operate and manage the charging trigger device and the charging processing device, for example, configure a charging policy on the charging processing device, and set a default usage amount obtaining mode on the charging trigger device. The input device 804 may be a keyboard or a pointing device, such as a mouse, a trackball, a touchpad, a microphone, a joystick, a game pad, a satellite television antenna, or a scanner or a similar device, and may be connected to the processor 801 by the bus 803.

The output device 805 may be configured to output information, so that a system administrator can operate and manage the charging trigger device and the charging processing device, for example, display a charging policy on the charging processing device, and display a default usage amount obtaining mode on the charging trigger device. In addition to a monitor, the output device 805 may be another peripheral output device, such as a speaker and/or a print device, or may be connected to the processor 801 by the bus 803.

Both the charging trigger device and the charging processing device may be connected to a network, for example, connected to a local area network (Local Area Network, LAN), by the network interface 806. In a networked environment, computer-executable instructions stored in the charging trigger device and the charging processing device may be stored in a remote storage device, and are not limited to being stored locally.

When the processor 801 in the charging trigger device executes executable code or an application program stored in the memory 802, the charging trigger device may perform method steps corresponding to the charging trigger device (or the SMF) in all the foregoing embodiments, for example, steps 430, 601, 606, 613, 651, 656, 663, 701-1, and 705-2. For a specific execution process, refer to the foregoing embodiments. Details are not described herein again.

When the processor 801 in the charging processing device executes the executable code or the application program stored in the memory 802, the charging processing device may perform method steps corresponding to the charging processing device (or the CHF) in all the foregoing embodiments, such as steps 440, 603, 604, 608, 615, 653, 661, 665, 703, and 708. For a specific execution process, refer to the foregoing embodiments. Details are not described herein again.

FIG. 9 is a schematic diagram of a logical structure of a charging processing device according to an embodiment of this application. The charging processing device is connected to a charging trigger device, and includes the following modules.

A receiving module 901 is configured to receive a first charging request message from the charging trigger device, where the first charging request message includes redundant transmission information, and the redundant transmission information is related information of redundant transmission used for a first data connection service in a data connection session. For a specific execution process, refer to the descriptions of the steps on the charging processing device (or the SMF) side in the foregoing embodiments, for example, steps 430, 602, 607, 610, 652, 657, 702-1, and 702-2.

A sending module 902 is configured to perform charging processing based on the redundant transmission information to obtain a charging processing result, and send a first charging response message to the charging trigger device. For a specific execution process, refer to the descriptions of the steps on the charging processing device (or the SMF) side in the foregoing embodiment, for example, steps 440, 603, 604, 653, 654, 661, 703, and 708.

FIG. 10 is a schematic diagram of a logical structure of a charging trigger device according to an embodiment of this application. The charging trigger device communicates with a charging processing device and includes the following modules.

A sending module 1001 is configured to send a first charging request message to the charging processing device, where the first charging request message includes redundant transmission information, and the redundant transmission information is related information of redundant transmission used for a first data connection service in a data connection session. For a specific execution process, refer to the descriptions or the steps on the charging trigger device (or the SMF) side in the foregoing embodiments, for example, steps 430, 602, 607, 610, 652, 655, 702-1, and 702-2.

A receiving module 1002 is configured to receive a first charging response message from the charging processing device, where the first charging response message includes a charging processing result, and the charging processing result is a result of charging processing performed by the charging processing device based on the redundant transmission information. For a specific execution process, refer to the descriptions of the steps on the charging trigger device (or the SMF) side in the foregoing embodiments, for example, steps 450, 605, 609, 612, 655, 659, 662, 704-1, and 704-2.

The charging processing device shown in FIG. 9 and the charging trigger device shown in FIG. 10 are presented in a form of functional modules. The "module" herein may be an application-specific integrated circuit (application-specific integrated circuit, ASIC), a circuit, a processor and a memory that execute one or more software or firmware programs, an integrated logic circuit, and/or another device that can provide the foregoing functions. In a simple embodiment, a person skilled in the art may figure out that these devices may also be in the form shown in FIG. 8. For example, the receiving module 901, the sending module 1001, the sending module 902, and the receiving module 1002 may all be implemented by using the processor 801 and the memory 802 in FIG. 8. For example, both the charging request message receiving function of the receiving module 901 and the charging request message sending function of the sending module 1001 can be implemented by the processor 801 by executing the code stored in the memory 802.

A person of ordinary skill in the art may be aware that, in combination with the examples described in embodiments disclosed in this specification, units and algorithm steps can be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions.

It may be clearly understood by a person of ordinary skill in the art that, for ease and brief description, for a detailed working process of the foregoing system, apparatus and units, refer to a corresponding process in the foregoing method embodiments, and details are not described herein again.

In several embodiments provided in this application, it can be understood that the disclosed system, apparatus, and method may be implemented in another manner. For example, division into the units is merely logical function division and may be another division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be in one position, or may be distributed on a plurality of network units. Some or all of the units may be selected depending on actual requirements to achieve the objectives of the solutions of embodiments of this application.

In addition, functional units in embodiments of this application may be integrated into one processing unit, each of the units may exist alone physically, or two or more units may be integrated into one unit. The integrated unit may be implemented in a form of hardware, or may be implemented in a form of a software function unit.

When the integrated unit is implemented in the form of a software functional unit and sold or used as an independent product, the integrated unit may be stored in a computer-readable storage medium. Based on such an understanding, the technical solutions in this application essentially, or the part contributing to the conventional art, or all or a part of the technical solutions may be implemented in the form of a software product. The computer software product is stored in a storage medium and includes several instructions for instructing a computer device (which may be a personal computer, a server, a network device, or the like) to perform all or a part of the steps of the methods described in embodiments of this application. The foregoing storage medium includes any medium that can store program code, such as a removable hard disk, a read-only memory, a random access memory, a magnetic disk, or an optical disc.

The foregoing descriptions are merely specific implementations of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. A charging processing method, comprising:
sending (430), by a charging trigger device, a first charging request message to a charging processing device, wherein the first charging request message comprises redundant transmission information, and the redundant transmission information is related information of redundant transmission used for a first data connection service in a data connection session, wherein the redundant transmission information indicates a redundant transmission type of the first data connection service and the redundant transmission type is any one of the following: session redundancy, tunnel redundancy or transport layer redundancy, the redundant transmission information further indicates related information of another data connection session mutually redundant with the data connection session when the redundant transmission type of the first data connection service is session redundancy; and
receiving (450), by the charging trigger device, a first charging response message from the charging processing device, wherein the first charging response message comprises a charging processing result, and wherein the charging processing result is a result of charging processing based on the redundant transmission information.

2. The method according to claim 1, wherein the redundant transmission information indicates that transmission used for the first data connection service is redundant transmission.

3. The method according to any one of claims 1 to 2, wherein the method further comprises:
performing, by the charging trigger device, redundancy-included usage amount processing or redundancy-excluded usage amount processing.

4. The method according to any one of claims 1 to 3, wherein the method further comprises:
sending, by the charging trigger device, a usage amount corresponding to the first data connection service and usage amount description information to the charging processing device, wherein the usage amount description information indicates that the usage amount is redundancy-included usage amount or redundancy-excluded usage amount.

5. The method according to any one of claims 1 to 4, wherein the method further comprises:
sending, by the charging trigger device, a transmission delay of the first data connection service to the charging processing device.

6. The method according to any one of claims 1 to 5, wherein the first data connection service is a set of service data flows, wherein the set of service data flows are at a granularity of a data connection session, at a granularity of a QoS flow, at a granularity of a rating group or at a granularity of a service in a rating group, or
wherein the first data connection service is a service data flow, wherein the service data flow is at a granularity of a data connection session, at a granularity of a QoS flow, at a granularity of a rating group or at a granularity of a service in a rating group.

7. A charging processing method, comprising:
receiving (430), by a charging processing device, a first charging request message from a charging trigger device, wherein the first charging request message comprises redundant transmission information, and the redundant transmission information is related information of redundant transmission used for a first data connection service in a data connection session, wherein the redundant transmission information indicates a redundant transmission type of the first data connection service, and the redundant transmission type is any one of the following: session redundancy, tunnel redundancy or transport layer redundancy, the redundant transmission information further indicates related information of another data connection session mutually redundant with the data connection session when the redundant transmission type of the first data connection service is session redundancy; and
performing (440), by the charging processing device, charging processing based on the redundant transmission information to obtain a charging processing result, and sending (450) a first charging response message to the charging trigger device, wherein the first charging response message comprises the charging processing result.

8. The method according to claim 7, wherein the redundant transmission information indicates that transmission used for the first data connection service is redundant transmission.

9. The method according to any one of claims 7 to 8, wherein the method further comprises:
receiving, by the charging processing device, a usage amount corresponding to the first data connection service and usage amount description information from the charging trigger device, wherein the usage amount description information indicates that the usage amount is redundancy-included usage amount or redundancy-excluded usage amount.

10. The method according to any one of claims 7 to 9, wherein
the method further comprises: receiving, by the charging processing device, a transmission delay of the first data connection service from the charging trigger device; and
the performing (420), by the charging processing device, charging processing based on the redundant transmission information comprises: performing, by the charging processing device, charging processing based on the redundant transmission information and the transmission delay.

11. The method according to any one of claims 7 to 10, wherein the method further comprises:
writing, by the charging processing device, information about the first data connection service into a charging data record, wherein the information about the first data connection service comprises any one of the following: the redundant transmission information, usage amount description information of a usage amount, or transmission delay of the first data connection service.

12. The method according to any one of claims 7 to 11, wherein the method further comprises:
receiving, by the charging trigger device, the first charging response message from the charging processing device.

13. A computer-readable storage medium, comprising, wherein when the instructions are run on a computer, the computer is enabled to perform the charging processing method according to any one of claims 1 to 11.

14. A device, wherein the apparatus comprises at least one processor and a communication interface, and the at least one processor is configured to invoke a computer program stored in at least one memory, so that the apparatus implements the method according to any one of claims 1 to 11.

15. A system, comprises a charging trigger device and a charging processing device, wherein
the charging trigger device is configured to implement the method according to any one of claims 1 to 6, and
the charging processing device is configured to implement the method according to any one of claims 7 to 11.

## Patentansprüche

1. Ladeverarbeitungsverfahren, umfassend:
Senden (430) einer ersten Ladeanforderungsnachricht durch eine Ladeauslösevorrichtung an eine Ladeverarbeitungsvorrichtung, wobei die erste Ladeanforderungsnachricht redundante Übertragungsinformationen umfasst und die redundanten Übertragungsinformationen zugehörige Informationen einer redundanten Übertragung sind, die für einen ersten Datenverbindungsdienst in einer Datenverbindungssitzung verwendet werden, wobei die redundanten Übertragungsinformationen einen redundanten Übertragungstyp des ersten Datenverbindungsdienstes angeben und der redundante Übertragungstyp ein beliebiger der Folgenden ist: Sitzungsredundanz, Tunnelredundanz oder Transportschichtredundanz, wobei die redundanten Übertragungsinformationen ferner zugehörige Informationen einer anderen Datenverbindungssitzung angeben, die mit der Datenverbindungssitzung gegenseitig redundant ist, wenn der redundante Übertragungstyp des ersten Datenverbindungsdienstes eine Sitzungsredundanz ist; und
Empfangen (450) einer ersten Ladeantwortnachricht von der Ladeverarbeitungsvorrichtung durch die Ladeauslösevorrichtung, wobei die erste Ladeantwortnachricht ein Ladeverarbeitungsergebnis umfasst und wobei das Ladeverarbeitungsergebnis ein Ergebnis einer Ladeverarbeitung basierend auf den redundanten Übertragungsinformationen ist.

2. Verfahren nach Anspruch 1, wobei die redundanten Übertragungsinformationen angeben, dass die für den ersten Datenverbindungsdienst verwendete Übertragung eine redundante Übertragung ist.

3. Verfahren nach einem der Ansprüche 1 bis 2, wobei das Verfahren ferner Folgendes umfasst:
Durchführen einer Redundanz-enthaltenden Nutzungsmengenverarbeitung oder einer Redundanzausgeschlossenen Nutzungsmengenverarbeitung durch die Ladeauslösevorrichtung.

4. Verfahren nach einem der Ansprüche 1 bis 3, wobei das Verfahren ferner Folgendes umfasst:
Senden einer Nutzungsmenge entsprechend dem ersten Datenverbindungsdienst und von Beschreibungsinformationen der Nutzungsmengen durch die Ladeauslösevorrichtung an die Ladeverarbeitungsvorrichtung, wobei die Beschreibungsinformationen der Nutzungsmengen angeben, dass die Nutzungsmenge eine Redundanz-enthaltende Nutzungsmenge oder eine Redundanz-ausgeschlossene Nutzungsmenge ist.

5. Verfahren nach einem der Ansprüche 1 bis 4, wobei das Verfahren ferner Folgendes umfasst:
Senden einer Übertragungsverzögerung des ersten Datenverbindungsdienstes durch die Ladeauslösevorrichtung an die Ladeverarbeitungsvorrichtung.

6. Verfahren nach einem der Ansprüche 1 bis 5, wobei der erste Datenverbindungsdienst ein Satz von Dienstdatenflüssen ist, wobei der Satz von Dienstdatenflüssen bei einer Granularität einer Datenverbindungssitzung, bei einer Granularität eines QoS-Flusses, bei einer Granularität einer Bewertungsgruppe oder bei einer Granularität eines Dienstes in einer Bewertungsgruppe steht; oder
wobei der erste Datenverbindungsdienst ein Dienstdatenfluss ist, wobei der Dienstdatenfluss bei einer Granularität einer Datenverbindungssitzung, bei einer Granularität eines QoS-Flusses, bei einer Granularität einer Bewertungsgruppe oder bei einer Granularität eines Dienstes in einer Bewertungsgruppe steht.

7. Ladeverarbeitungsverfahren, umfassend:
Empfangen (430) einer ersten Ladeanforderungsnachricht durch eine Ladeverarbeitungsvorrichtung von einer Ladeauslösevorrichtung, wobei die erste Ladeanforderungsnachricht redundante Übertragungsinformationen umfasst und die redundanten Übertragungsinformationen zugehörige Informationen einer redundanten Übertragung sind, die für einen ersten Datenverbindungsdienst in einer Datenverbindungssitzung verwendet werden, wobei die redundanten Übertragungsinformationen einen redundanten Übertragungstyp des ersten Datenverbindungsdienstes angeben und der redundante Übertragungstyp ein beliebiger der Folgenden ist: Sitzungsredundanz, Tunnelredundanz oder Transportschichtredundanz, wobei die redundanten Übertragungsinformationen ferner zugehörige Informationen einer anderen Datenverbindungssitzung angeben, die mit der Datenverbindungssitzung gegenseitig redundant ist, wenn der redundante Übertragungstyp des ersten Datenverbindungsdienstes Sitzungsredundanz ist; und
Durchführen (440) einer Ladeverarbeitung durch die Ladeverarbeitungsvorrichtung basierend auf den redundanten Übertragungsinformationen, um ein Ladeverarbeitungsergebnis zu erlangen, und Senden (450) einer ersten Ladeantwortnachricht an die Ladeauslösevorrichtung, wobei die erste Ladeantwortnachricht das Ladeverarbeitungsergebnis umfasst.

8. Verfahren nach Anspruch 7, wobei die redundanten Übertragungsinformationen angeben, dass die für den ersten Datenverbindungsdienst verwendete Übertragung eine redundante Übertragung ist.

9. Verfahren nach einem der Ansprüche 7 bis 8, wobei das Verfahren ferner Folgendes umfasst:
Empfangen einer Nutzungsmenge entsprechend dem ersten Datenverbindungsdienst und von Beschreibungsinformationen der Nutzungsmengen durch die Ladeverarbeitungsvorrichtung von der Ladeauslösevorrichtung, wobei die Beschreibungsinformationen der Nutzungsmengen angeben, dass die Nutzungsmenge eine Redundanz-enthaltende Nutzungsmenge oder eine Redundanz-ausgeschlossene Nutzungsmenge ist.

10. Verfahren nach einem der Ansprüche 7 bis 9, wobei das Verfahren ferner Folgendes umfasst: Empfangen einer Übertragungsverzögerung des ersten Datenverbindungsdienstes von der Ladeauslösevorrichtung durch die Ladeverarbeitungsvorrichtung; und
das Durchführen (420) einer Ladeverarbeitung durch die Ladeverarbeitungsvorrichtung basierend auf den redundanten Übertragungsinformationen Folgendes umfasst: Durchführen einer Ladeverarbeitung durch die Ladeverarbeitungsvorrichtung basierend auf den redundanten Übertragungsinformationen und der Übertragungsverzögerung.

11. Verfahren nach einem der Ansprüche 7 bis 10, wobei das Verfahren ferner Folgendes umfasst:
Schreiben von Informationen über den ersten Datenverbindungsdienst in einen Ladedatensatz durch die Ladeverarbeitungsvorrichtung, wobei die Informationen über den ersten Datenverbindungsdienst beliebige der Folgenden umfassen: die redundanten Übertragungsinformationen, Beschreibungsinformationen der Nutzungsmengen einer Nutzungsmenge oder eine Übertragungsverzögerung des ersten Datenverbindungsdienstes.

12. Verfahren nach einem der Ansprüche 7 bis 11, wobei das Verfahren ferner Folgendes umfasst:
Empfangen der ersten Ladeantwortnachricht durch die Ladeauslösevorrichtung von der Ladeverarbeitungsvorrichtung.

13. Computerlesbares Speichermedium, umfassend Anweisungen, wobei, wenn die Anweisungen auf einem Computer ausgeführt werden, der Computer in die Lage versetzt wird, das Ladeverarbeitungsverfahren nach einem der Ansprüche 1 bis 11 durchzuführen.

14. Vorrichtung, wobei die Apparatur mindestens einen Prozessor und eine Kommunikationsschnittstelle umfasst und der mindestens eine Prozessor dazu konfiguriert ist, das in mindestens einem Speicher gespeicherte Computerprogramm aufzurufen, sodass die Apparatur das Verfahren nach einem der Ansprüche 1 bis 11 implementiert.

15. System, umfassend eine Ladeauslösevorrichtung und eine Ladeverarbeitungsvorrichtung; wobei
die Ladeauslösevorrichtung dazu konfiguriert ist, das Verfahren nach einem der Ansprüche 1 bis 6 zu implementieren, und
die Ladeverarbeitungsvorrichtung dazu konfiguriert ist, das Verfahren nach einem der Ansprüche 7 bis 11 zu implementieren.

## Revendications

1. Procédé de traitement de facturation, comprenant :
l'envoi (430), par un dispositif de déclenchement de facturation, d'un premier message de demande de facturation à un dispositif de traitement de facturation, dans lequel le premier message de demande de facturation comprend des informations de transmission redondante, et les informations de transmission redondante sont des informations relatives à la transmission redondante utilisée pour un premier service de connexion de données dans une session de connexion de données, dans lequel les informations de transmission redondante indiquent un type de transmission redondante du premier service de connexion de données et le type de transmission redondante est l'un quelconque des types suivants :
la redondance de session, la redondance de tunnel ou la redondance de couche de transport, les informations de transmission redondante indiquent également des informations connexes d'une autre session de connexion de données mutuellement redondantes avec la session de connexion de données lorsque le type de transmission redondante du premier service de connexion de données est la redondance de session ; et
la réception (450), par le dispositif de déclenchement de facturation, d'un premier message de réponse de facturation provenant du dispositif de traitement de facturation, dans lequel le premier message de réponse de facturation comprend un résultat de traitement de facturation, et dans lequel le résultat de traitement de facturation est un résultat de traitement de facturation sur la base des informations de transmission redondante.

2. Procédé selon la revendication 1, dans lequel les informations de transmission redondante indiquent que la transmission utilisée pour le premier service de connexion de données est une transmission redondante.

3. Procédé selon l'une quelconque des revendications 1 et 2, dans lequel le procédé comprend également :
la réalisation, par le dispositif de déclenchement de facturation, d'un traitement de quantité d'utilisation incluant la redondance ou d'un traitement de quantité d'utilisation excluant la redondance.

4. Procédé selon l'une quelconque des revendications 1 à 3, dans lequel le procédé comprend également :
l'envoi, par le dispositif de déclenchement de facturation, d'une quantité d'utilisation correspondant au premier service de connexion de données et d'informations de description de quantité d'utilisation au dispositif de traitement de facturation, dans lequel les informations de description de quantité d'utilisation indiquent que la quantité d'utilisation est une quantité d'utilisation incluant la redondance ou une quantité d'utilisation excluant la redondance.

5. Procédé selon l'une quelconque des revendications 1 à 4, dans lequel le procédé comprend également :
l'envoi, par le dispositif de déclenchement de facturation, d'un délai de transmission du premier service de connexion de données au dispositif de traitement de facturation.

6. Procédé selon l'une quelconque des revendications 1 à 5, dans lequel le premier service de connexion de données est un ensemble de flux de données de service, dans lequel l'ensemble de flux de données de service est à une granularité d'une session de connexion de données, à une granularité d'un flux QoS, à une granularité d'un groupe de classification ou à une granularité d'un service dans un groupe de classification ; ou
dans lequel le premier service de connexion de données est un flux de données de service, dans lequel le flux de données de service est à une granularité d'une session de connexion de données, à une granularité d'un flux QoS, à une granularité d'un groupe de classification ou à une granularité d'un service dans un groupe de classification.

7. Procédé de traitement de facturation, comprenant :
la réception (430), par un dispositif de traitement de facturation, d'un premier message de demande de facturation provenant d'un dispositif de déclenchement de facturation, dans lequel le premier message de demande de facturation comprend des informations de transmission redondante, et les informations de transmission redondante sont des informations relatives à la transmission redondante utilisée pour un premier service de connexion de données dans une session de connexion de données, dans lequel les informations de transmission redondante indiquent un type de transmission redondante du premier service de connexion de données, et le type de transmission redondant est l'un quelconque des types suivants :
la redondance de session, la redondance de tunnel ou la redondance de couche de transport, les informations de transmission redondante indiquent également des informations connexes d'une autre session de connexion de données mutuellement redondantes avec la session de connexion de données lorsque le type de transmission redondante du premier service de connexion de données est la redondance de session ; et
la réalisation (440), par le dispositif de traitement de facturation, d'un traitement de facturation sur la base des informations de transmission redondante pour obtenir un résultat de traitement de facturation, et l'envoi (450) d'un premier message de réponse de facturation au dispositif de déclenchement de facturation, dans lequel le premier message de réponse de facturation comprend le résultat de traitement de facturation.

8. Procédé selon la revendication 7, dans lequel les informations de transmission redondante indiquent que la transmission utilisée pour le premier service de connexion de données est une transmission redondante.

9. Procédé selon l'une quelconque des revendications 7 et 8, dans lequel le procédé comprend également :
la réception, par le dispositif de traitement de facturation, d'une quantité d'utilisation correspondant au premier service de connexion de données et d'informations de description de quantité d'utilisation provenant du dispositif de déclenchement de facturation, dans lequel les informations de description de quantité d'utilisation indiquent que la quantité d'utilisation est une quantité d'utilisation incluant la redondance ou une quantité d'utilisation excluant la redondance.

10. Procédé selon l'une quelconque des revendications 7 à 9, dans lequel
le procédé comprend également : la réception, par le dispositif de traitement de facturation, d'un délai de transmission du premier service de connexion de données provenant du dispositif de déclenchement de facturation ; et
la réalisation (420), par le dispositif de traitement de facturation, d'un traitement de facturation sur la base des informations de transmission redondante comprend : la réalisation, par le dispositif de traitement de facturation, d'un traitement de facturation sur la base des informations de transmission redondante et du délai de transmission.

11. Procédé selon l'une quelconque des revendications 7 à 10, dans lequel le procédé comprend également :
l'écriture, par le dispositif de traitement de facturation, d'informations sur le premier service de connexion de données dans un enregistrement de données de facturation, dans lequel les informations sur le premier service de connexion de données comprennent l'un quelconque des éléments suivants : les informations de transmission redondante, les informations de description de quantité d'utilisation d'une quantité d'utilisation, ou le délai de transmission du premier service de connexion de données.

12. Procédé selon l'une quelconque des revendications 7 à 11, dans lequel le procédé comprend également :
La réception, par le dispositif de déclenchement de facturation, du premier message de réponse de facturation provenant du dispositif de traitement de facturation.

13. Support de stockage lisible par ordinateur, comprenant, dans lequel, lorsque les instructions sont exécutées sur un ordinateur, l'ordinateur est activé pour réaliser le procédé de traitement de facturation selon l'une quelconque des revendications 1 à 11.

14. Dispositif, dans lequel l'appareil comprend au moins un processeur et une interface de communication, et l'au moins un processeur est configuré pour invoquer un programme informatique stocké dans au moins une mémoire, de sorte que l'appareil met en œuvre le procédé selon l'une quelconque des revendications 1 à 11.

15. Système, comprenant un dispositif de déclenchement de facturation et un dispositif de traitement de facturation ; dans lequel
le dispositif de déclenchement de facturation est configuré pour mettre en œuvre le procédé selon l'une quelconque des revendications 1 à 6, et
le dispositif de traitement de facturation est configuré pour mettre en œuvre le procédé selon l'une quelconque des revendications 7 à 11.
